# EUROPEAN PATENT APPLICATION

(11) **EP 4 700 543 A1**
(43) Date of publication of application: **25.02.2026**
(21) Application number: 24843274.2
(22) Date of filing: 20.05.2024
(51) Int. Cl.: G06F 3/01, G06F 3/04842, G06F 3/00, H04W 4/80, G06F 1/16

(54) **WEARABLE DEVICE FOR COMMUNICATING WITH EXTERNAL ELECTRONIC DEVICE, AND METHOD THEREFOR**

(30) Priority: 20.07.2023 KR 20230094338; 21.08.2023 KR 20230109132
(71) Applicant: Samsung Electronics Co., Ltd., Suwon-si, Gyeonggi-do 16677 (KR)
(72) Inventor: SHIM, Jeaguk, Suwon-si Gyeonggi-do 16677 (KR); KIM, Hyunsoo, Suwon-si Gyeonggi-do 16677 (KR); NAM, Myoungwoo, Suwon-si Gyeonggi-do 16677 (KR); YOO, Nagyeom, Suwon-si Gyeonggi-do 16677 (KR); LEE, Yoonho, Suwon-si Gyeonggi-do 16677 (KR); YIM, Sunghoon, Suwon-si Gyeonggi-do 16677 (KR)
(74) Representative: Gulde & Partner
(86) International application number: PCT/KR2024/006807
(87) International publication number: WO 2025/018552

(57) **Abstract**

A processor of a wearable device, according to one embodiment, can display a first visual object corresponding to an external object on a display. The processor can: identify, on the basis of the direction of a gaze toward the first visual object, indicated by sensor data of a sensor, a motion of the external object by using a camera; establish a communication link with at least one external electronic device capable of tracking the external object identified on the basis of the motion; and acquire information about the external object from the at least one external electronic device through the communication link on the basis of identifying that the display of the first visual object is stopped after the communication link is established, and display, on the display on the basis of the acquired information, a second visual object related to the external object.

## Description

### [Technical Field]

The present disclosure relates to a wearable device for communicating with an external electronic device and a method therefor.

### [Background Art]

In order to provide an enhanced user experience, an electronic device providing an augmented reality (AR) service displaying information generated by a computer in connection with an external object in a real-world is being developed. The electronic device may be a wearable device that may be worn by a user. For example, the electronic device may be AR glasses and/or a head-mounted device (HMD).

### [Disclosure]

### [Technical Solution]

According to an embodiment, a wearable device may comprise one or more sensors, communication circuitry, a camera, a display, memory including one or more storage media storing instructions and at least one processor including processing circuitry. The instructions, when executed by the at least one processor individually or collectively, may cause the wearable device to obtain an image to be displayed on the display by controlling the camera. The instructions, when executed by the at least one processor individually or collectively, may cause the wearable device to identify a first visual object corresponding to an external object in the obtained image. The instructions, when executed by the at least one processor individually or collectively, may cause the wearable device to display the image on the display. The instructions, when executed by the at least one processor individually or collectively, cause the wearable device to identify a gaze of a user wearing the wearable device using the one or more sensors. The instructions, when executed by the at least one processor individually or collectively, may cause the wearable device to identify, based on a direction of the gaze directed to the first visual object, a motion of the external object using the camera. The instructions, when executed by the at least one processor individually or collectively, may cause the wearable device to establish, using the communication circuitry, a communication link with at least one external electronic device capable of tracking the external object that is identified based on the motion. The instructions, when executed by the at least one processor individually or collectively, may cause the wearable device to, based on identifying that a display of the first visual object is ceased after establishing the communication link, obtain information with respect to the external object from the at least one external electronic device through the communication link and display a second visual object associated with the external object on the display based on the obtained information.

According to an embodiment, a method of a wearable device may comprise obtaining an image to be displayed on a display of the wearable device by controlling a camera of the wearable device. The method may comprise identifying a first visual object corresponding to an external object in the obtained image. The method may comprise displaying the image on the display of the wearable device. The method may comprise identifying a gaze of a user wearing the wearable device using one or more sensors of the wearable device. The method may comprise identifying, based on a direction of the gaze directed to the first visual object, a motion of the external object using the camera. The method may comprise establishing, using communication circuitry of the wearable device, a communication link with at least one external electronic device capable of tracking the external object that is identified based on the motion. The method may comprise, based on identifying that a display of the first visual object is ceased after establishing the communication link, obtaining information with respect to the external object from the at least one external electronic device through the communication link and displaying a second visual object associated with the external object on the display based on the obtained information.

According to an embodiment, a wearable device may comprise one or more sensors, communication circuitry, a camera, a display, and at least one processor. The at least one processor may be configured to obtain an image to be displayed on the display by controlling the camera. The at least one processor may be configured to display the image including a visual object corresponding to an external object on the display. The at least one processor may be configured to identify a direction of a gaze of a user wearing the wearable device using sensor data of the one or more sensors. The at least one processor may be configured to, based on the direction of the gaze directed to the visual object, identify a motion of the external object that is moved along a direction from a first position, using the camera. The at least one processor may be configured to establish, using the communication circuitry, a communication link with a first external electronic device adjacent to the first position, based on the motion. The at least one processor may be configured to, based on identifying that the external object is moved from the first position to a second position along the direction after establishing the communication link, change the communication link to share information with respect to the external object with the first external electronic device and a second external electronic device adjacent to the second position.

According to an embodiment, a method of a wearable device may comprise obtaining an image to be displayed on the display, by controlling a camera of the wearable device. The method may comprise displaying the image including a visual object corresponding to an external object on the display of the wearable device. The method may comprise identifying a direction of a gaze of a user wearing the wearable device, using sensor data of one or more sensors of the wearable device. The method may comprise, based on the direction of the gaze directed to the visual object, identifying a motion of the external object that is moved along a direction from a first position, using the camera. The method may comprise establishing, using communication circuitry of the wearable device, a communication link with a first external electronic device adjacent to the first position, based on the motion. The method may comprise, based on identifying that the external object is moved from the first position to a second position along the direction after establishing the communication link, changing the communication link to share information with respect to the external object with the first external electronic device and a second external electronic device adjacent to the second position.

### [Description of the Drawings]

FIG. 1 is a diagram for describing an example of a screen displayed through a display of a wearable device, according to an embodiment.
FIG. 2 illustrates an example of a block diagram of a wearable device, according to an embodiment.
FIG. 3 illustrates an example of a flowchart of a wearable device, according to an embodiment.
FIG. 4 illustrates an example of a flowchart of a wearable device, according to an embodiment.
FIG. 5 illustrates an exemplary operation of a wearable device for identifying a motion of a user associated with an external object.
FIG. 6 illustrates an exemplary operation of a wearable device for forming a cluster including one or more external electronic devices.
FIG. 7 illustrates an exemplary operation of a wearable device for forming a cluster including one or more external electronic devices.
FIG. 8 illustrates an example of a screen displayed by a wearable device communicating with an external electronic device.
FIG. 9 illustrates an example of a screen displayed by a wearable device communicating with an external electronic device.
FIG. 10 illustrates an example of a flowchart of a wearable device, according to an embodiment.
FIG. 11 illustrates an example of a flowchart of a wearable device, according to an embodiment.
FIG. 12 illustrates an example of a flowchart of a wearable device, according to an embodiment.
FIG. 13 illustrates an example of a flowchart of a wearable device, according to an embodiment.
FIG. 14 illustrates an example of a signal flow diagram between a wearable device and an external electronic device, according to an embodiment.
FIG. 15A illustrates an example of a perspective view of a wearable device, according to an embodiment.
FIG. 15B illustrates an example of one or more hardware disposed in a wearable device, according to an embodiment.
FIGS. 16A to 16B illustrate an example of an exterior of a wearable device, according to an embodiment.
FIG. 17 is an exemplary diagram with respect to a network environment associated with a metaverse service.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, are only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

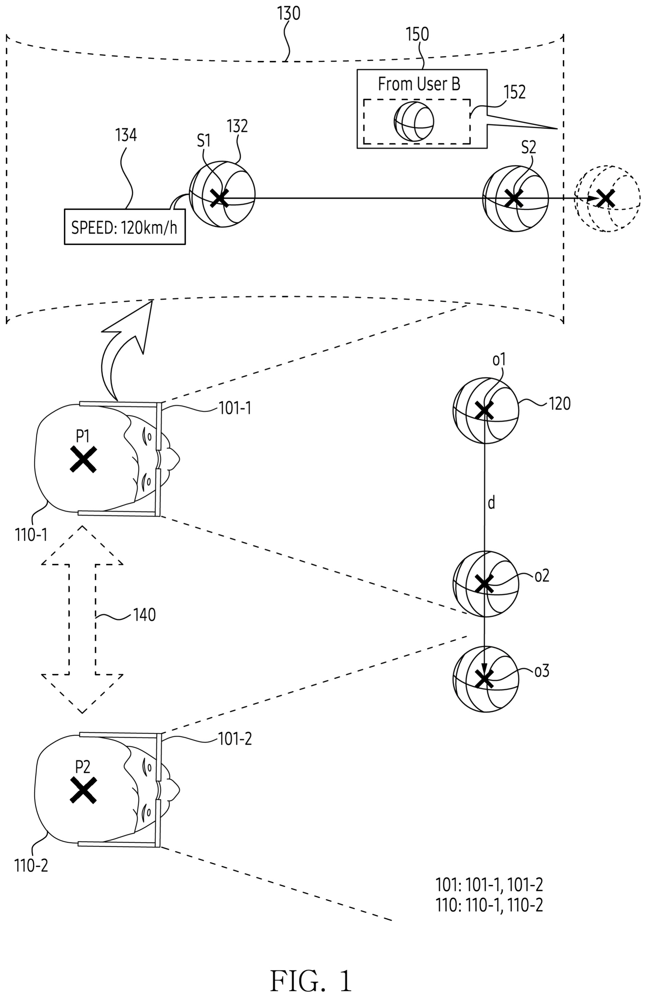

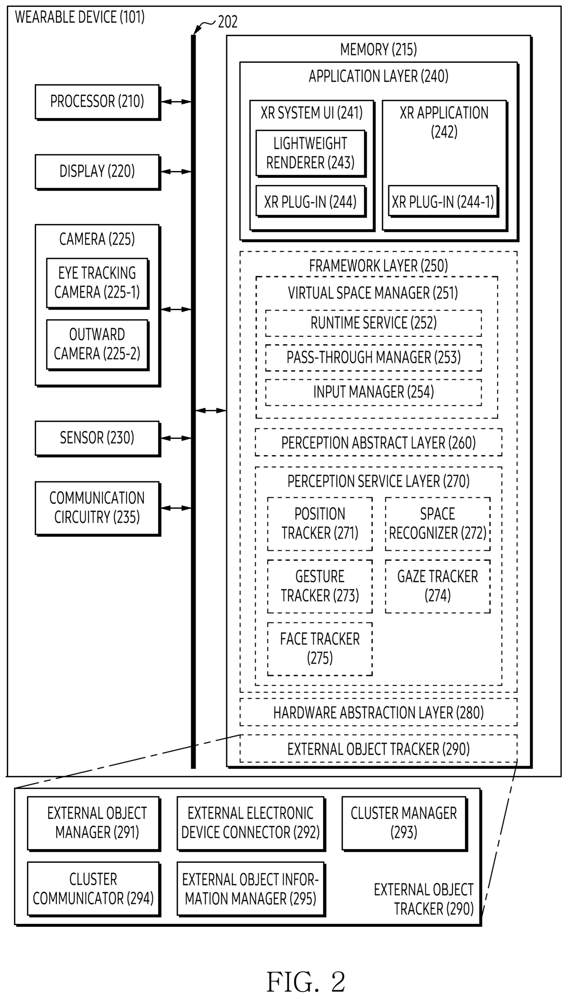

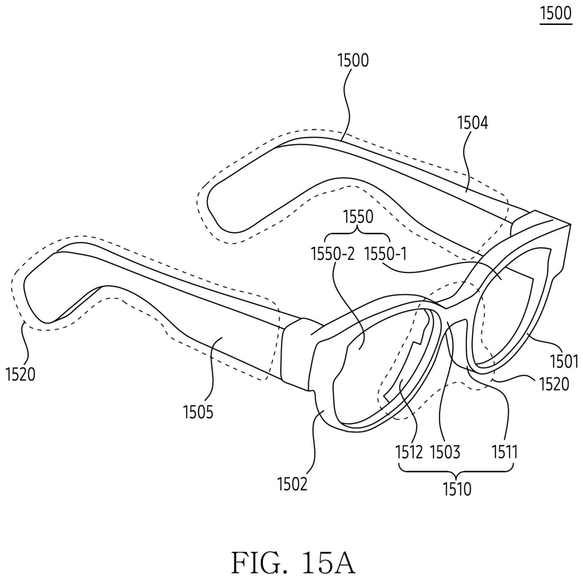

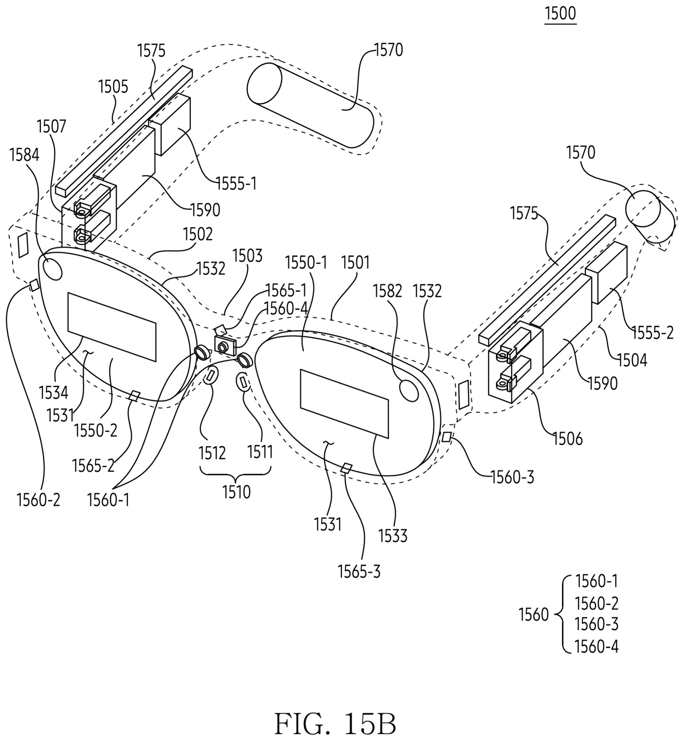

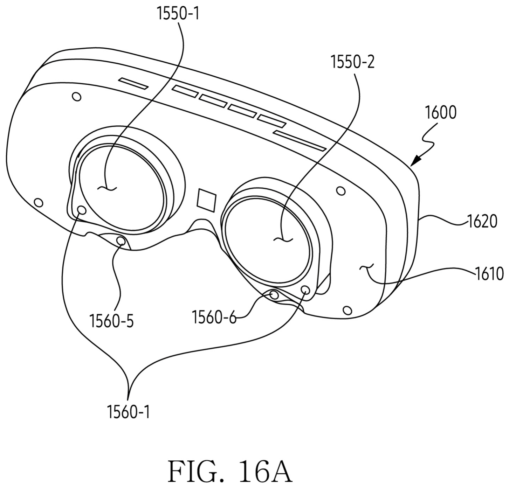

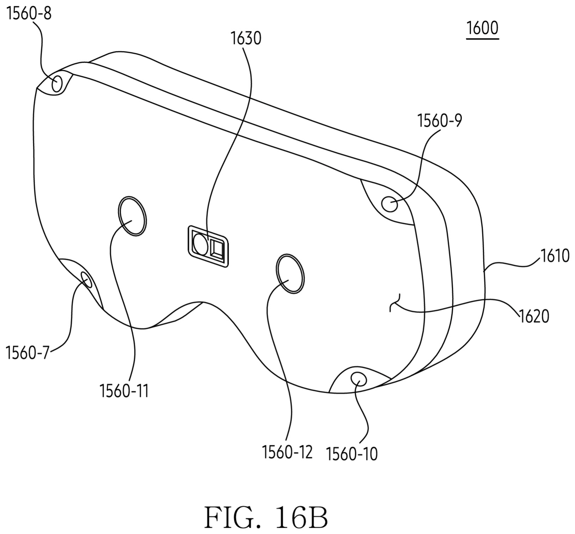

FIG. 1 is a diagram for describing an example of a screen 130 displayed through a display of a wearable device 101, according to an embodiment. The wearable device 101 may include a head-mounted display (HMD) wearable on a head of a user 110. The wearable device 101 may be referred to as a head-mount device (HMD), a headgear electronic device, a glassestype electronic device, a virtual reality (VR) device, and/or an augmented reality (AR) device. Although an external appearance of the wearable device 101 having a shape of glasses is illustrated, an embodiment is not limited thereto. An example of one or more hardware included in the wearable device 101 is exemplarily described with reference to FIG. 2. An example of a structure of the wearable device 101 wearable on the head of the user 110 will be described with reference to FIGS. 15A, 15B, 16A and/or 16B. The wearable device 101 may be referred to as an electronic device. For example, the electronic device may form the HMD by being coupled with an accessory for being attached to a head of a user.

According to an embodiment, the wearable device 101 may execute a function associated with a video see-through (VST) and/or virtual reality (VR). For example, in a state that the user 110 wears the wearable device 101, the wearable device 101 may include a housing covering eyes of the user 110. The wearable device 101 may include a display disposed on a first surface of the housing directed to the eyes in the state. The wearable device 101 may include a camera disposed on a second surface opposite to the first surface. Using the camera, the wearable device 101 may obtain an image and/or a video representing ambient light. The wearable device 101 may cause the user 110 to recognize the ambient light through the display by outputting the image and/or the video in the display disposed on the first surface. A displaying area (or an active area) of the display disposed on the first surface may be formed by one or more pixels included in the display. By synthesizing a virtual object with the image and/or the video outputted through the display, the wearable device 101 may cause the user 110 to recognize the virtual object together with a real object recognized by the ambient light.

According to an embodiment, the wearable device 101 may execute a function associated with augmented reality (AR) and/or mixed reality (MR). For example, in a state that the user 110 wears the wearable device 101, the wearable device 101 may include at least one lens disposed adjacent to the eyes of the user 110. The wearable device 101 may couple ambient light passing through a lens with light radiated from the display of the wearable device 101. The displaying area of the display may be formed in the lens through which the ambient light passes. Since the wearable device 101 couples the ambient light and the light radiated from the display, the user 110 may see an image in which the real object recognized by the ambient light and the virtual object formed by the light radiated from the display are mixed. The above-described augmented reality, mixed reality, and/or virtual reality may be referred to as extended reality (XR).

Referring to FIG. 1, a plurality of wearable devices (e.g., a first wearable device 101-1 and/or a second wearable device 101-2) worn by different users (e.g., a first user 110-1 and/or a second user 110-2) are illustrated. As shown in FIG. 1, the first wearable device 101-1 is positioned at a point p1, and the second wearable device 101-2 is positioned at a point p2 spaced apart from the point p1. The first wearable device 101-1 may display an image and/or a video with respect to a front direction of the first user 110-1 wearing the first wearable device 101-1 on the screen 130. In an exemplary situation of FIG. 1 in which an external object 120 (e.g., a ball) is positioned at a point o1 in the front direction of the first user 110-1, the first wearable device 101-1 may display the screen 130 including a visual object 132 corresponding to the external object 120. In an embodiment in which the first wearable device 101-1 provides the VST-based screen 130, the visual object 132 may correspond to at least a portion of the image and/or the video obtained by the first wearable device 101-1.

In an embodiment, the wearable device 101 may execute a function for tracking the external object 120 corresponding to the visual object 132 displayed through the screen 130. For example, the first wearable device 101-1 may obtain information with respect to a type (e.g., a class and/or a category) and/or a motion of the external object 120, by tracking the external object 120 based on the function. The first wearable device 101-1 may display at least a portion of the obtained information in the screen 130. Referring to FIG. 1, while the visual object 132 is displayed at a point s1 in the screen 130 corresponding to the point o1 of the external object 120, the first wearable device 101-1 may display a visual object 134 including at least a portion of the information at a point in the screen 130 linked with the visual object 132. The visual object 134 including a numeric value (e.g., "120 km/h") indicating a speed of the external object 120 is exemplarily illustrated, but an embodiment is not limited thereto.

In an exemplary case of FIG. 1, the first wearable device 101-1 may communicate with the second wearable device 101-2 to execute a function for tracking the external object 120. For example, the first wearable device 101-1 may identify one or more external electronic devices (e.g., the second wearable device 101-2) for sharing information with respect to the external object 120 based on a motion (e.g., a motion identified by at least one of a movement direction, a speed, and/or a velocity) of the external object 120 identified by the first wearable device 101-1. The first wearable device 101-1 may identify at least one external electronic device capable of tracking the external object 120 among external electronic devices adjacent to the first wearable device 101-1. Referring to FIG. 1, the first wearable device 101-1 identifying a movement direction d of the external object 120 may identify that a distance between the second wearable device 101-2 and the external object 120 is decreased as the external object 120 is moved along the movement direction d. The first wearable device 101-1 may establish a communication link 140 for sharing the information with respect to the external object 120 with the second wearable device 101-2 in which the distance with the external object 120 is decreased. The first wearable device 101-1 may establish the communication link 140 with the second wearable device 101-2 based on identifying the motion of the external object 120, and/or identifying a focus of the first user 110-1 with respect to the external object 120.

Referring to FIG. 1, the external object 120 that is moved along the movement direction d may be moved from the point o1 to a point o2. At timing at which the external object 120 is positioned at the point o2, the first wearable device 101-1 may display the visual object 132 corresponding to the external object 120 at a point s2 adjacent to a periphery of the screen 130. The periphery of the screen 130 may correspond to a boundary of a field-of-view (FoV) of the first user 110-1 wearing the first wearable device 101-1. As the external object 120 is moved along the movement direction d after the timing, the external object 120 may be moved outside the FoV. After the timing, the first wearable device 101-1 may cease displaying the visual object 132 corresponding to the external object 120 on the screen 130.

In an embodiment, the first wearable device 101-1 identifying that the display of the visual object 132 corresponding to the external object 120 in the screen 130 is ceased may obtain the information with respect to the external object 120 using the communication link established with the second wearable device 101-2. An exemplary case in which the display of the visual object 132 is ceased, based on the external object 120 being moved outside the FoV of the first user 110-1 wearing the first wearable device 101-1 is described, but an embodiment is not limited thereto. For example, in a case that the external object 120 is occluded by another external object, the visual object 132 corresponding to the external object 120 may not be displayed in the screen 130. In the example, the first wearable device 101-1 identifying that the display of the visual object 132 is ceased may obtain information with respect to the external object 120 from an external electronic device (e.g., the second wearable device 101-2) connected through the communication link.

Referring to FIG. 1, the external object 120 that is moved to a point o3 along the direction d may be included in a FoV of the second user 101-2 wearing the second wearable device 101-2. The second wearable device 101-2 may transmit an image and/or a video associated with the external object 120 of the point o3 to the first wearable device 101-1 through the communication link. The first wearable device 101-1 receiving the image and/or the video may display a visual object 150 based on the image and/or the video on the screen 130. In the visual object 150, the first wearable device 101-1 may display an image and/or a video (e.g., an image 152) obtained from the second wearable device 101-2. The first wearable device 101-1 may display the visual object 150 including text (e.g., "From User B") indicating the second wearable device 101-2 providing the image and/or the video.

As described above, after the external object 120 focused by the first user 110-1 deviates from the FoV of the first user 110-1, the first wearable device 101-1 may display the visual object 150 associated with the external object 120 in the screen 130, based on information received from the external electronic device such as the second wearable device 101-2. In order to continuously track the external object 120, the first wearable device 101-1 may establish the communication link based on the motion of the external object 120. In a case that the external object 120 deviates from the FoV of the first user 110-1 and/or is not visible through the screen 130 displayed by the first wearable device 101-1, the first wearable device 101-1 may obtain information with respect to the external object 120 through the external electronic device (e.g., the second wearable device 101-2) connected through the communication link. Based on the information, the first wearable device 101-1 may continuously provide information with respect to the external object 120 to the first user 110-1 wearing the first wearable device 101-1 even after the external object 120 deviates from the FoV of the first user 110-1. Using the communication link, the first wearable device 101-1 may provide information with respect to the external object 120 tracked by the first wearable device 101-1 to an external electronic device such as the second wearable device 101-2.

Hereinafter, an exemplary hardware configuration of the wearable device 101 for exchanging the information with respect to the external object 120 will be described with reference to FIG. 2.

FIG. 2 illustrates an example of a block diagram of a wearable device 101, according to an embodiment. The wearable device 101 described with reference to FIG. 1 may include at least one of hardware components of the wearable device 101 distinguished by different blocks of FIG. 2.

Referring to FIG. 2, according to an embodiment, the wearable device 101 may include at least one of a processor 210, memory 215, or a display 220, a camera 225, or a sensor 230, or communication circuitry 235. The processor 210, the memory 215, the display 220, the camera 225, and the sensor 230 and/or the communication circuitry 235 may be electrically and/or operably coupled with each other by an electronical component such as a communication bus 202. A type and/or the number of the hardware component included in the wearable device 101 is not limited as illustrated in FIG. 2. For example, the wearable device 101 may include only a portion of the hardware component illustrated in FIG. 2.

According to an embodiment, the processor 210 of the wearable device 101 may include a hardware component to process data based on one or more instructions. For example, the hardware component to process the data may include an arithmetic and logic unit (ALU), a field programmable gate array (FPGA), a central processing unit (CPU), and/or an application processor (AP). In an embodiment, the wearable device 101 may include one or more processors. The processor 210 may have a structure of a multi-core processor such as a dual core, a quad core, a hexa core, and an octa core.

According an embodiment, the memory 215 of the wearable device 101 may include a hardware component for storing data and/or instructions inputted to the processor 210 or outputted from the processor 210. For example, the memory 215 may include volatile memory such as random-access memory (RAM), and/or non-volatile memory such as read-only memory (ROM). For example, the volatile memory may include at least one of dynamic RAM (DRAM), static RAM (SRAM), Cache RAM, and pseudo SRAM (PSRAM). For example, the non-volatile memory may include at least one of programmable ROM (PROM), erasable PROM (EPROM), electrically erasable PROM (EEPROM), flash memory, a hard disk, a compact disk, and an embedded multi media card (eMMC).

In an embodiment, the display 220 of the wearable device 101 may output visualized information to a user (e.g., the first user 110-1 and/or the second user 110-2 of FIG. 1). For example, the display 220 may be configured to visualize information provided from the processor 210 including circuitry such as a graphic processing unit (GPU). The display 220 may include a flexible display, a flat panel display (FPD), and/or electronic paper. The FPD may include a liquid crystal display (LCD), a plasma display panel (PDP), and/or one or more light emitting diodes (LEDs). The LED may include an organic LED (OLED). An embodiment is not limited thereto, and for example, in a case that the wearable device 101 includes a lens for transmitting external light (or ambient light), the display 220 may include a projector (or a projection assembly) for projecting light onto the lens.

In an embodiment, the camera 225 of the wearable device 101 may include optical sensors (e.g., a charged coupled device (CCD) sensor and a complementary metal oxide semiconductor (CMOS) sensor) generating an electrical signal indicating a color and/or brightness of light. The camera 225 may be referred to as an image sensor and may be included in the sensor 230 of FIG. 2. A plurality of optical sensors included in the camera 225 may be disposed in a shape of a 2 dimensional array. The camera 225 may generate 2 dimensional frame data corresponding to light reaching the optical sensors of the 2 dimensional array by substantially simultaneously obtaining electrical signals of each of the plurality of optical sensors. For example, photo data captured by using the camera 225 may mean a 2 dimensional frame data obtained from the camera 225. For example, video data captured by using the camera 225 may mean a sequence of the 2 dimensional frame data obtained from the camera 225 according to a frame rate. The camera 225 may further include flash light disposed toward a direction in which the camera 225 receives light, and for outputting light toward the direction.

According to an embodiment, the wearable device 101 may include a plurality of cameras disposed toward different directions as an example of the camera 225. Referring to FIG. 2, the camera 225 included in the wearable device 101 may include an eye tracking camera 225-1 and/or an outward camera 225-2. The eye tracking camera 225-1 may be disposed toward at least one of two eyes of the user wearing the wearable device 101. The processor 210 may identify a direction of a gaze of the user, using an image and/or a video obtained from the eye tracking camera 225-1. The eye tracking camera 225-1 may include an infrared (IR) sensor. The eye tracking camera 225-1 may be referred to as an eye sensor, a gaze tracker, and/or an eye tracker.

Referring to FIG. 2, the outward camera 225-2 may be disposed toward a front direction (e.g., a direction to which the two eyes may be directed) of the user wearing the wearable device 101. Using an image and/or a video obtained from the outward camera 225-2, the processor 210 may identify an external object (e.g., the external object 120 of FIG. 1). An embodiment is not limited thereto, and the processor 210 may identify a position, a shape, and/or a gesture (e.g., a hand gesture) of a hand, based on the image and/or the video obtained from the outward camera 225-2.

According to an embodiment, the sensor 230 of the wearable device 101 may generate electronic information that may be processed and/or stored by the processor 210 and/or the memory 215 of the wearable device 101 from non-electronic information associated with the wearable device 101. The information may be referred to as sensor data. The sensor 230 may include a global positioning system (GPS) sensor for detecting a geographic location of the wearable device 101, an image sensor, an illumination sensor and/or a time-of-flight (ToF) sensor, and an inertial measurement unit (IMU) (e.g., an acceleration sensor, a geomagnetic sensor, a gravity sensor, or any combination thereof) for detecting a physical motion of the wearable device 101.

In an embodiment, the communication circuitry 235 of the wearable device 101 may include circuitry for supporting transmission and/or reception of an electrical signal between the wearable device 101 and an external electronic device. For example, the communication circuitry 235 may include at least one of a MODEM , an antenna, and an optic/electronic (O/E) converter. The communication circuitry 235 may support the transmission and/or the reception of the electrical signal, based on various types of protocols such as Ethernet, a local area network (LAN), a wide area network (WAN), wireless fidelity (WiFi), Bluetooth, Bluetooth low energy (BLE), ZigBee, long term evolution (LTE), 5G new radio (NR), 6G and/or above-6G.

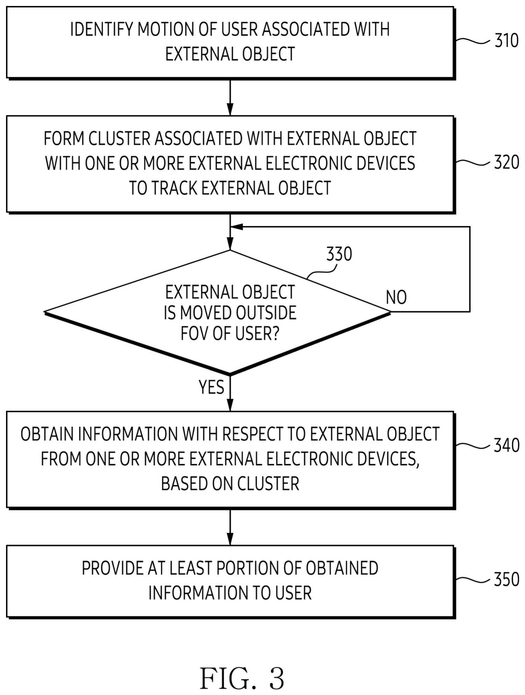

According to an embodiment, in the memory 215 of the wearable device 101, one or more instructions (or commands) indicating a calculation and/or an operation to be performed by the processor 210 of the wearable device 101 on data may be stored. A set of one or more instructions may be referred to as firmware, an operating system, a process, a routine, a sub-routine, and/or a software application (hereinafter, an application). For example, when a set of a plurality of instruction distributed in a form of an operating system, firmware, a driver, and/or an application is executed, the wearable device 101 and/or the processor 210 may perform at least one of operations of FIGS. 3, and 10 to 14. Hereinafter, an application being installed in the wearable device 101 may mean that one or more instructions provided in a shape of an application are stored in the memory 215, and the one or more applications are stored in a format (e.g., a file having an extension preset by an operating system of the wearable device 101) that is executable by the processor 210. As an example, the application may include a program and/or a library associated with a service provided to the user.

Referring to FIG. 2, programs installed in the wearable device 101 may be included in any one layer of different layers including an application layer 240, a framework layer 250, and/or a hardware abstraction layer (HAL) 280, based on a target. For example, in the hardware abstraction layer 280, programs (e.g., a module or a driver) designed to target hardware (e.g., the display 220, the camera 225, and/or the sensor 230) of the wearable device 101 may be included. The framework layer 250 may be referred to as an XR framework layer in terms of including one or more programs for providing an extended reality (XR) service. For example, layers illustrated in FIG. 2 are logically distinguished and may not mean that an address space of the memory 215 is distinguished by the layers.

For example, in the framework layer 250, programs (e.g., a position tracker 271, a space recognizer 272, a gesture tracker 273, a gaze tracker 274, and/or a face tracker 275) designed to target at least one of the hardware abstraction layer 280 and/or the application layer 240 may be included. The programs included in the framework layer 250 may provide an application programming interface (API) that is executable based on another program.

For example, in the application layer 240, a program designed to target the user of the wearable device 101 may be included. As an example of programs included in the application layer 240, an extended reality (XR) system user interface (UI) 241 and/or an XR application 242 are exemplified, but an embodiment is not limited thereto. For example, the programs (e.g., a software application) included in the application layer 240 may cause execution of a function supported by programs classified as the framework layer 250, by calling the application programming interface (API).

For example, based on execution of the XR system UI 241, the wearable device 101 may display, on the display 220, one or more visual objects for performing interaction with the user for using a virtual space. A visual object may mean an object deployable in a screen for transmission of information and/or interaction, such as text, an image, an icon, a video, a button, a check box, a radio button, a text box, a slider and/or a table. The visual object may be referred to as a visual guide, a virtual object, a visual element, a UI element, a view object, and/or a view element. The wearable device 101 may provide functions usable in the virtual space to the user, based on the execution of the XR system UI 241.

Referring to FIG. 2, it is illustrated that the XR system UI 241 includes a lightweight renderer 243 and/or an XR plug-in 244, but is not limited thereto. For example, based on the XR system UI 241, the processor 210 may execute the lightweight renderer 243 and/or the XR plug-in 244 in the framework layer 250.

For example, the wearable device 101 may obtain a resource (e.g., an API, a system process, and/or a library) used to define, generate, and/or execute a rendering pipeline for which a partial change is allowed based on execution of the lightweight renderer 243. The lightweight renderer 243 may be referred to as a lightweight renderer pipeline in terms of defining the rendering pipeline for which a partial change is allowed. The lightweight renderer 243 may include a renderer (e.g., a prebuilt renderer) built before execution of a software application. For example, the wearable device 101 may obtain a resource (e.g., an API, a system process, and/or a library) used to define, generate, and/or execute an entire rendering pipeline based on the execution of the XR plug-in 244. The XR plug-in 244 may be referred to as an open XR native client in terms of defining (or setting) the entire rendering pipeline.

For example, the wearable device 101 may display a screen indicating at least a portion of the virtual space on the display 220, based on execution of the XR application 242. An XR plug-in 244-1 included in the XR application 242 may include instructions that support a function similar to the XR plug-in 244 of the XR system UI 241. Among descriptions of the XR plug-in 244-1, a description overlapping a description of the XR plug-in 244 may be omitted. The wearable device 101 may cause execution of a virtual space manager 251, based on the execution of the XR application 242.

According to an embodiment, the wearable device 101 may provide a virtual space service, based on the execution of the virtual space manager 251. For example, the virtual space manager 251 may include a platform for supporting the virtual space service. Based on the execution of the virtual space manager 251, the wearable device 101 may identify a virtual space formed based on a position of the user indicated by data obtained through the sensor 230, and may display at least a portion of the virtual space on the display 220. The virtual space manager 251 may be referred to as a composition presentation manager (CPM).

For example, the virtual space manager 251 may include a runtime service 252. As an example, the runtime service 252 may be referred to as an OpenXR runtime module. The wearable device 101 may execute at least one of a pose prediction function of the user, a frame timing function, and/or a space input function, based on execution of the runtime service 252. As an example, the wearable device 101 may perform rendering for the virtual space service to the user based on the execution of the runtime service 252. For example, based on the execution of the runtime service 252, a function associated with a virtual space, executable by the application layer 240, may be supported.

For example, the virtual space manager 251 may include a pass-through manager 253. While displaying a screen indicating a virtual space on the display 220, based on execution of the pass-through manager 253, the wearable device 101 may overlap and display another screen indicating an actual space obtained through the camera 225 on at least a portion of the screen.

For example, the virtual space manager 251 may include an input manager 254. The wearable device 101 may identify data (e.g., sensor data) obtained by executing one or more programs included in a perception service layer 270, based on execution of the input manager 254. The wearable device 101 may identify a user input associated with the wearable device 101, using the obtained data. The user input may be associated with a motion (e.g., a hand gesture), a gaze, and/or a speech of the user identified by the sensor 230.

For example, a perception abstract layer 260 may be used for data exchange between the virtual space manager 251 and the perception service layer 270. In terms of being used for the data exchange between the virtual space manager 251 and the perception service layer 270, the perception abstract layer 260 may be referred to as an interface. As an example, the perception abstract layer 260 may be referred to as OpenPX. The perception abstract layer 260 may be used for a perception client and a perception service.

According to an embodiment, the perception service layer 270 may include one or more programs for processing data obtained from the sensor 230 (or the camera 225). The one or more programs may include at least one of the position tracker 271, the space recognizer 272, the gesture tracker 273, the gaze tracker 274, and/or the face tracker 273. A type and/or the number of one or more programs included in the perception service layer 270 is not limited to those illustrated in FIG. 2.

For example, the wearable device 101 may identify a pose of the wearable device 101, using the sensor 230, based on execution of the position tracker 271. The wearable device 101 may identify 6 degrees of freedom pose (6 dof pose) of the wearable device 101, using data obtained using the camera 225 and the sensor 230 (e.g., the IMU), based on the execution of the position tracker 271. The position tracker 271 may be referred to as a head tracking (HeT) module.

For example, the wearable device 101 may be used to configure a surrounding environment of the wearable device 101 (or the user of the wearable device 101) into a 3 dimensional virtual space, based on execution of the space recognizer 272. Based on the execution of the space recognizer 272, the wearable device 101 may reconstruct the surrounding environment of the wearable device 101 in 3 dimensions, using data obtained using the camera 225. The wearable device 101 may identify at least one of a plane, an inclination, and a step, based on the surrounding environment of the wearable device 101 reconstructed in the 3 dimensions, based on the execution of the space recognizer 272. The space recognizer 272 may be referred to as a scene understanding (SU) module.

For example, the wearable device 101 may identify (or recognize) a pose and/or a gesture of the hand of the user of the wearable device 101, based on execution of the gesture tracker 273. As an example, the wearable device 101 may identify the pose and/or the gesture of the hand of the user, using data obtained from the sensor 230, based on the execution of the gesture tracker 273. As an example, the wearable device 101 may identify the pose and/or the gesture of the hand of the user, based on data (or an image) obtained using the camera 225, based on the execution of the gesture tracker 273. The gesture tracker 273 may be referred to as a hand tracking (HaT) module and/or a gesture tracking module.

For example, the wearable device 101 may identify (or track) movement of the eyes of the user of the wearable device 101, based on execution of the gaze tracker 274. As an example, the wearable device 101 may identify the movement of the eyes of the user, using data obtained from at least one sensor based on the execution of the gaze tracker 274. As an example, the wearable device 101 may identify the movement of the eyes of the user, based on data obtained using a camera (e.g., the eye tracking camera 225-1) and/or an infrared light emitting diode (IR LED) based on the execution of the gaze tracker 274. The eye tracker 274 may be referred to as an eye tracking (ET) module and/or a gaze tracking module.

For example, the perception service layer 270 of the wearable device 101 may further include the face tracker 275 for tracking a face of the user. For example, the wearable device 103 may identify (or track) facial movement of the user and/or a facial expression of the user, based on execution of the face tracker 275. The wearable device 101 may estimate the facial expression of the user, based on the facial movement of the user, based on the execution of the face tracker 275. As an example, the wearable device 101 may identify the facial movement of the user and/or the facial expression of the user, based on data (e.g., an image) obtained using the camera 225, based on the execution of the face tracker 275.

According to an embodiment, the processor 210 of the wearable device 101 may track an external object by communicating with a plurality of external electronic devices including the wearable device 101, based on execution of an external object tracker 290. Based on execution of an external object manager 291, the wearable device 101 may identify whether an object of interest of the user exists in a FoV of the user wearing the wearable device 101. In a case that the object of interest exists in the FoV, the processor 210 may obtain information indicating a motion of the object of interest, such as a direction of movement, a speed, and/or a distance of the object of interest, using the camera 225. Based on the information, the processor 210 may determine a score and/or a priority associated with the object of interest. In a case that the object of interest does not exist in the FoV, the processor 210 may determine the score and/or the priority associated with the object of interest, based on a relationship between the FoV and the object of interest and/or a situation recognized by the processor 210.

According to an embodiment, the processor 210 of the wearable device 101 may establish a communication link with one or more external electronic devices, based on execution of an external electronic device connector 292. The processor 210 may receive information with respect to the external object from the external electronic device through the communication link. The processor 210 may receive a signal for requesting the information with respect to the external object from the external electronic device through the communication link. Based on the signal, the processor 210 may transmit the information with respect to the external object requested by the signal to the external electronic device.

According to an embodiment, the processor 210 of the wearable device 101 may establish the communication link with the one or more external electronic devices, based on the score and/or the priority determined by the external object manager 291, based on execution of a cluster manager 293. For example, the processor 210 may establish the communication link preferentially with an external electronic device capable of tracking an external object having a relatively high priority. The processor 210 may manage a list of one or more external electronic devices connected to the wearable device 101, based on the execution of the cluster manager 293. The list may be divided into a first list with respect to external electronic devices that only establish the communication link and do not exchange information with respect to the external object, and a second list with respect to external electronic devices sharing information with respect to the external object through the communication link. Hereinafter, a cluster may refer to a group of a plurality of electronic devices included in the list including the wearable device 101.

According to an embodiment, the processor 210 of the wearable device 101 may share the information with respect to the external object or/or information with respect to the external object associated with an emergency, based on execution of a cluster communicator 294. Sharing the information may be performed between electronic devices included in the cluster in which the wearable device 101 is included. Based on the information shared in the cluster, the processor 210 may change the priority and/or the score determined by the external object manager 291 and corresponding to the external object.

According to an embodiment, the processor 210 of the wearable device 101 may obtain information obtained from the sensor 230 and/or the camera 225 based on execution of an external object information manager 295. Based on the information, the processor 210 may identify a type (e.g., a class and/or a category) of the external object. Based on the information, the processor 210 may identify a position of the external object (e.g., a relative position of the external object with respect to the wearable device 101). The information with respect to the external object obtained based on the execution of the external object information manager 295 may include the type and/or the position. The processor 210 may transmit the information obtained based on the execution of the external object information manager 295 to one or more external electronic devices included in the cluster including the wearable device 101 through the communication circuitry 235.

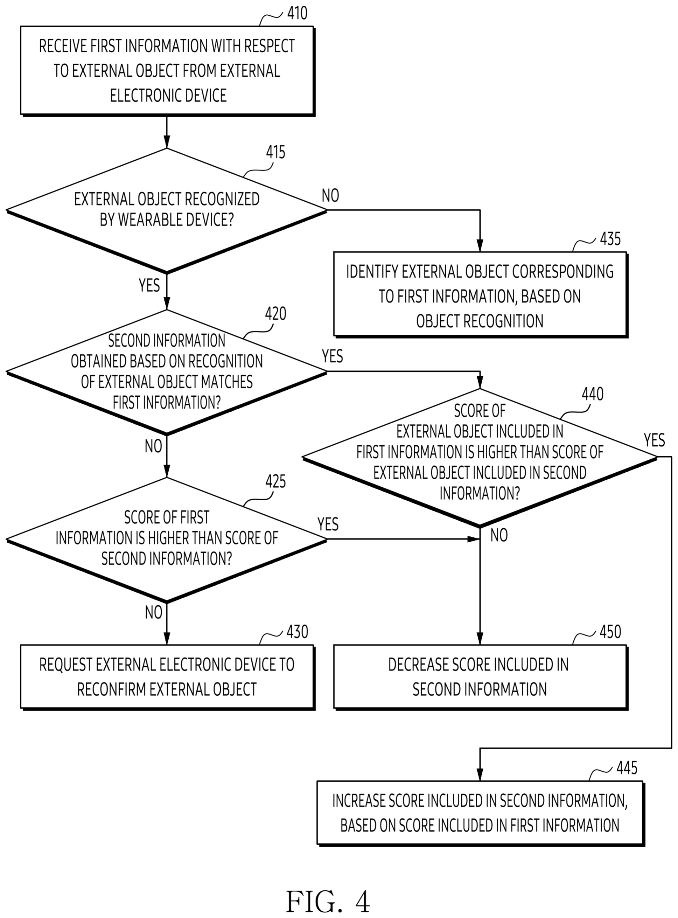

As described above, according to an embodiment, the wearable device 101 may include hardware and/or software for tracking the external object. Hereinafter, an exemplary operation of the wearable device 101 in which a cluster is formed with one or more external electronic devices to track the external object will be described with reference to FIGS. 3 and/or 4.

FIG. 3 illustrates an example of a flowchart of a wearable device, according to an embodiment. The wearable device 101 of FIGS. 1 and/or 2 may perform operations of the wearable device described with reference to FIG. 3. For example, the wearable device 101 and/or the processor 210 of FIG. 2 may perform operations of FIG. 3.

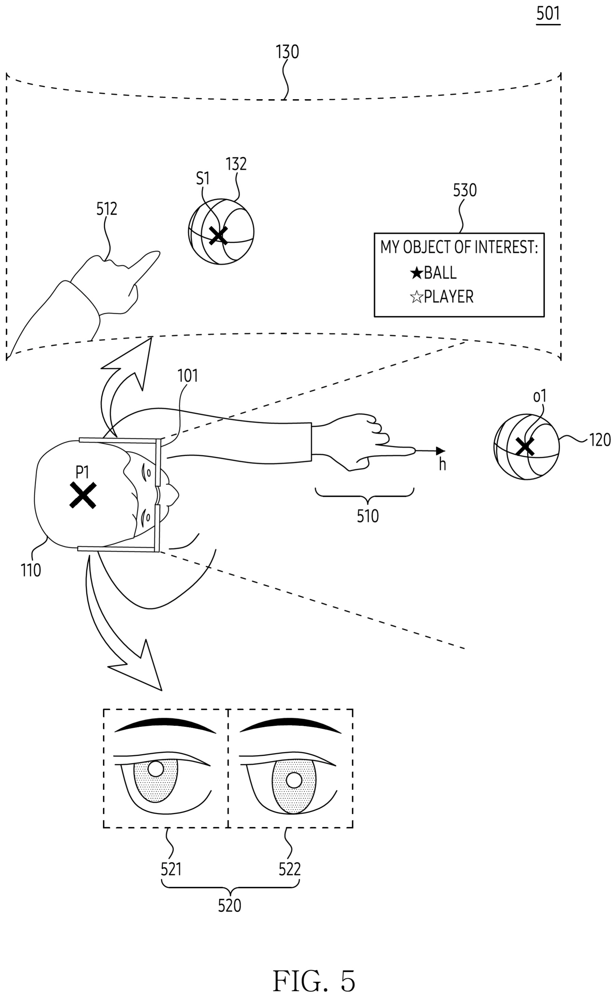

Referring to FIG. 3, in operation 310, according to an embodiment, a processor of the wearable device may identify a motion of a user associated with an external object. Using a camera (e.g., the outward camera 225-2 of FIG. 2), the processor displaying a visual object corresponding to the external object on a display (e.g., the display 220 of FIG. 2) may identify a direction of a gaze directed to the visual object which is indicated by data of a sensor (e.g., the sensor 230 and/or the eye tracking camera 225-1 of FIG. 2). Based on the direction of the gaze, the processor may identify the motion of the operation 310. For example, the motion of the operation 310 may include a motion of the user for focusing on the external object, such as a gaze of the user looking at the external object and/or a hand gesture of the user pointing at the external object. An exemplary operation of the processor identifying the motion of the operation 310 will be described with reference to FIG. 5.

The processor identifying the motion of operation 310 may identify a motion of the external object corresponding to the motion, using the camera. For example, the processor may obtain information indicating the motion of the external object. The information may include a speed and/or a distance (e.g., a distance between the wearable device and the external object) of the external object. The information may include a score and/or a priority for the external object. The processor may determine the priority corresponding to the external object, based on a movement direction, a speed, and/or a distance of the external object.

Referring to FIG. 3, in operation 320, according to an embodiment, the processor of the wearable device may form a cluster associated with the external object with one or more external electronic devices to track the external object. For example, the processor may identify at least one external electronic device to be connected to the wearable device, based on the motion and/or the speed of the external object. The processor may form the cluster of operation 320, by establishing a communication link with the identified at least one external electronic device. For example, the cluster may mean a group of a plurality of electronic devices connected to each other to share information with respect to a specific external object. The electronic devices being connected to each other may mean that a communication link (or a communication channel, and/or a session) for sharing the information has been established.

In an embodiment, the processor may form the cluster of operation 320, based on the motion of the external object. The processor may establish a communication link for forming the cluster by communicating with at least one external electronic device included in an external space having a size associated with the speed of the external object. For example, by communicating with the at least one external electronic device included in the external space having a shape based on the speed and/or the movement direction of the external object, the processor may form the cluster of operation 320. The processor may form the cluster of operation 320, based on a position of the external electronic device and/or a FoV of a camera included in the external electronic device. Based on operation 320, the processor may establish a communication link with at least one external electronic device capable of tracking the external object, using communication circuitry.

In order to form the cluster of operation 320, the processor of the wearable device may obtain capability information with respect to the external electronic device adjacent to the wearable device. The capability information may include the FoV (e.g., a direction, an azimuth, and/or an angle) of the camera included in the external electronic device and/or a type of the external electronic device. Based on the capability information, the processor may classify the external electronic device into any one type among preset types.

The preset type may include a first type for classifying an AR/VR device, such as the wearable device 101 of FIG. 1. Through the first type of the external electronic device, the processor may obtain information with respect to a direction of the external electronic device and/or at least one external object tracked by the external electronic device.

The preset type may include a second type for classifying an electronic device capable of collecting information from another electronic device, such as a server. Through the second type of the external electronic device, the processor may obtain information with respect to an external object collected by another external electronic device connected to the external electronic device. Through the second type of the external electronic device, the processor may obtain the information with respect to the external object collected by the external electronic device, based on a specific purpose. For example, the server classified as the second type may include a server for collecting traffic information of a specific position and/or a road. An embodiment is not limited thereto, and the server may include an electronic device for collecting and/or processing local information, such as mobile edge computing (MEC).

The preset type may include a third type for classifying an electronic device that is not classified into the first type and the second type. For example, a closed-circuit television (CCTV) and/or a traffic light may be included. In order to obtain information with respect to an external object included in a preset category (e.g., a category for classifying an external object associated with a dangerous situation), the processor may form a cluster including the third type of an external electronic device.

The processor forming the cluster of operation 320 may classify external electronic devices included in the cluster into different groups, based on whether or not information with respect to the external object is shared. For example, the processor may establish only a communication link with the external electronic devices classified as a first group and may not share information with respect to external objects. For example, the processor may classify an external electronic device sharing information with respect to the external object into a second group different from the first group.

In a state of forming the cluster of operation 320, the processor of the wearable device may establish the communication link with the external electronic device, based on whether the external electronic device may track the external object and/or share the information with respect to the external object. For example, in a case that the external electronic device allows access to a camera, a microphone, and/or a sensor to track the external object, the wearable device may establish the communication link with the external electronic device. In an embodiment, the processor may display information (e.g., a list of the one or more external electronic devices included in the cluster) associated with the cluster formed based on the operation 320 through the display.

Referring to FIG. 3, in operation 330, according to an embodiment, the processor of the wearable device may identify whether the external object is moved outside the FoV of the user. For example, the processor may identify whether the external object focused by the user was moved outside the FoV. In a case that the wearable device includes the display (e.g., the display 220 of FIG. 2) covering the two eyes of the user in a state that the wearable device is worn by the user, the processor may, based on identifying that a visual object (e.g., the visual object 132 of FIG. 1) corresponding to the external object is moved out of a periphery of the display by moving of the external object with respect to the wearable device, determine that the external object is moved outside the FoV. Before the external object is moved outside the FoV, or in a case that the external object is positioned inside the FoV (330-NO), the processor may maintain the communication link established based on the cluster of the operation 320. In a case that the external object is moved outside the FoV (330-YES), the processor may perform an operation 340.

Referring to FIG. 3, in operation 340, according to an embodiment, the processor of the wearable device may obtain information with respect to the external object from the one or more external electronic devices, based on the cluster. For example, in a case that the external object is moved outside the FoV of the user, the processor may initiate obtaining the information with respect to the external object from the external electronic device. For example, the processor may request the one or more external electronic devices included in the cluster to transmit the information with respect to the external object. Based on the request, the processor may receive a signal including the information from the one or more external electronic devices.

Referring to FIG. 3, in operation 350, according to an embodiment, the processor of the wearable device may provide at least a portion of the obtained information to the user. For example, after identifying the external object moved outside the FoV based the operation 330, the processor may display a visual object associated with the external object, based on operation 350. The visual object may include text, an image, and/or an icon indicating the external electronic device providing the information. The visual object may include an image and/or a video included in the information. The visual object 150 of FIG. 1 may be displayed by the processor performing operation 350 of FIG. 3.

As described above, according to an embodiment, the wearable device may obtain the information with respect to the external object positioned outside the FoV of the user wearing the wearable device from the external electronic device. The wearable device may determine whether to provide the information to the user, based on accuracy and/or a risk of the external object identified by the information. The wearable device may share the information with respect to the external object based on peer-to-peer (P2P), using the cluster of the operation 320. For example, the wearable device may obtain the information with respect to the external object from the external electronic device independently of a centralized server. In the example, an amount of a calculation of the centralized server may be reduced.

FIG. 4 illustrates an example of a flowchart of a wearable device, according to an embodiment. The wearable device 101 of FIGS. 1 and/or 2 may perform operations of the wearable device described with reference to FIG. 4. For example, the wearable device 101 and/or the processor 210 of FIG. 2 may perform operations of FIG. 4.

Referring to FIG. 4, in operation 410, according to an embodiment, a processor of the wearable device may receive first information with respect to an external object from an external electronic device. The processor may receive the first information of the operation 410, based on a cluster including the external electronic device and the wearable device. The first information may be broadcast and/or transmitted by an external electronic device identifying a specific external object (e.g., an external object with a relatively high probability capable of causing an accident) distinguished by a risk.

Referring to FIG. 4, in operation 415, according to an embodiment, the processor of the wearable device may identify whether the external object of operation 410 is an external object recognized by the wearable device. The processor may identify whether the external object corresponding to the first information is the external object recognized by the wearable device based on an identifier (ID) allocated to the external object and/or feature information of the external object included in the first information. In a case that the external object of operation 410 matches the external object recognized by the wearable device (415-YES), the processor may perform operation 420. In a case that the external object of operation 410 is not the external object recognized by the wearable device (415-NO), the processor may perform operation 435.

Referring to FIG. 4, in operation 420, according to an embodiment, the processor of the wearable device may identify whether second information obtained based on recognition of the external object matches the first information. In a case that the external object corresponding to the first information of operation 410 matches the external object recognized by the processor, the second information corresponding to the external object may have already been stored in memory (e.g., the memory 215 of FIG. 2) of the wearable device. The processor may compare a feature of the external object included in the second information and a feature of the external object included in the first information, by comparing the second information stored in the memory and the first information. In a case that the second information matches with the first information (420-YES), the processor may perform operation 440. In a case that the second information and the first information do not match each other (420-NO), the processor may perform operation 425.

Referring to FIG. 4, according to an embodiment, in operation 425, the processor of the wearable device may identify whether a score of the first information is higher than a score of the second information. The score of operation 425 may include a priority allocated to an external object. The score of operation 425 may be associated with a risk to the external object. For example, the score of operation 425 may be associated with a probability that an accident by the external object occurs. The processor may compare the score of the first information and the score of the second information. In a case that the score of the first information is less than or equal to the score of the second information (425-NO), the processor may perform operation 430. In a case that the score of the first information is greater than the score of the second information (425-YES), the processor may perform operation 450.

Referring to FIG. 4, in operation 430, the processor of the wearable device according to an embodiment may request the external electronic device to reconfirm the external object. The processor may notify the external electronic device of operation 410 that the score of the first information is lower than the score of the second information. In a case that the score is associated with the risk to the external object, the processor may request the external electronic device to recalculate the risk to the external object, by transmitting the score of the second information identified by the processor to the external electronic device.

Referring to FIG. 4, in operation 435, according to an embodiment, the processor of the wearable device may identify the external object corresponding to the first information, based on object recognition. In a case that it is determined that the first information with respect to the external object not recognized by the processor has been received, based on operation 415, the processor may perform operation 435. The processor may identify the external object corresponding to the first information of operation 410 by performing a scan with respect to an external space including the wearable device. The processor identifying the external object corresponding to the first information may register the external object in the memory of the wearable device. For example, the processor may store information (e.g., at least partially corresponding to the first information) corresponding to the external object in the memory.

Referring to FIG. 4, in operation 440, according to an embodiment, the processor of the wearable device may identify whether a score of the external object included in the first information is higher than a score of the external object included in the second information. Based on operation 420, the processor identifying the first information and the second information matching each other may perform operation 440. In a case that the score included in the first information is greater than the score included in the second information (440-YES), the processor may perform operation 445. In a case that the score included in the first information is less than or equal to the score included in the second information (440-NO), the processor may perform operation 450.

Referring to FIG. 4, in operation 445, according to an embodiment, the processor of the wearable device may increase the score included in the second information, based on the score included in the first information. In a case that the score is associated with the risk to the external object, and the score included in the first information is greater than the score included in the second information, the processor may increase the risk to the external object by increasing the score for the external object registered in the wearable device, based on the score included in the first information. Based on the increased risk, the processor may notify and/or warn the user wearing the wearable device of the risk to the external object.

Referring to FIG. 4, in operation 450, according to an embodiment, the processor of the wearable device may decrease the score included in the second information. In case that the score is associated with the risk to the external object, the score included in the first information being lower than the score included in the second information may mean that a risk of the external object evaluated by the external electronic device is lower than a risk of the external object evaluated by the processor. The processor may decrease the risk to the external object by decreasing the score for the external object registered in the wearable device, based on the score of the first information.

As described above, according to an embodiment, the processor of the wearable device may obtain the first information with respect to the external object from the external electronic device using the cluster. Based on the first information, the processor may update the second information registered in the wearable device and corresponding to the external object. Based on the update, all electronic devices included in the cluster may obtain synchronized information with respect to a specific external object.

FIG. 5 illustrates an exemplary operation of a wearable device 101 for identifying a motion of a user 110 associated with an external object 120. The wearable device 101 of FIGS. 1 and/or 2 may perform an operation described with reference to FIG. 5.

Referring to FIG. 5, an exemplary state 501 of the wearable device 101 worn by the user 110 is illustrated. In the state 501, the wearable device 101 may display a screen 130 including an image and/or a video with respect to a front direction. In the exemplary state 501 that the external object 120 is positioned in the front direction of the wearable device 101, a visual object 132 corresponding to the external object 120 may be displayed in the screen 130. A point s1 of the visual object 132 viewed through the screen 130 may correspond to a point o1 of the external object 120.

According to an embodiment, the wearable device 101 may identify the external object 120 focused by the user 110, by detecting and/or measuring the motion of the user 110. In a case of identifying a plurality of external objects adjacent to the wearable device 101, the wearable device 101 may identify one external object focused by the user 110 among the plurality of external objects, based on the motion. The motion of the user 110 may be identified using a camera (e.g., the camera 225 and/or the eye tracking camera 225-1 of FIG. 2), a sensor (e.g., the sensor 230 of FIG. 2) and/or a microphone included in the wearable device 101.

Referring to FIG. 5, the wearable device 101 may identify a motion associated with the external object 120, using a gesture performed by a hand 510. The gesture performed by the hand 510 may be identified based on an image and/or a video of the camera (e.g., the outward camera 225-2 of FIG. 2) included in the wearable device 101. An embodiment is not limited thereto, and in a case that the user 110 holds an external electronic device such as a remote controller, the wearable device 101 may identify the gesture performed by the hand 510, based on a signal received from the remote controller. Referring to FIG. 5, the wearable device 101 identifying a pointing gesture of the hand 510 pointing a direction h may identify the motion of the user 110 associated with the external object 120, based on whether the external object 120 is positioned on the direction h. The wearable device 101 obtaining an image and/or a video associated with the hand 510 of the user 110 may display the screen 130 including a visual object 512 corresponding to the hand 510 based on a VST. In the screen 130, the wearable device 101 may display a virtual object representing the hand 510.

Referring to FIG. 5, the wearable device 101 may identify a gaze of the user 110, using images 520 associated with an eyeball of the user 110. Identifying the gaze of the user 110 may include calculating a direction of the gaze. Referring to FIG. 5, using an image 521 corresponding to a left eye of the user 110 and/or an image 522 corresponding to a right eye of the user 110, the wearable device 101 may identify directions to which the two eyes of the user 110 are directed. The wearable device 101 may identify the gaze of the user 110 directed to the external object 120, based on at least one of the directions. For example, based on whether the external object 120 is positioned on the direction of the gaze of the user 110, the wearable device 101 may determine that the external object 120 is focused by the user 110.

An embodiment of identifying the external object 120 focused by the user 110 based on the direction of the hand 510 and the gaze of the user 110 has been described, but an embodiment is not limited thereto. For example, the wearable device 101 may identify the external object 120 focused by the user 110, based on a direction of a head of the user 110 (e.g., a front surface of the head where a face is positioned). For example, the wearable device 101 may identify the external object 120 focused by the user 110, based on a speech of the user 110. For example, in a case that the user 110 speaks a natural language sentence including a name of a specific external object, such as "a basketball is flying," the wearable device 101 may identify the focus of the user on the external object 120, using the name included in the natural language sentence, based on speechto-text (STT).

In an embodiment, the wearable device 101 may obtain information with respect to an object of interest from the user 110. For example, the wearable device 101 may obtain the information with respect to the object of interest, based on receiving an input for setting a priority of the object of interest from the user 110. For example, the wearable device 101 may receive the input for setting the priority with respect to the object of interest through a visual object 530 displayed in the screen 130. In the visual object 530, the wearable device 101 may display a list of the objects of interest capable of being adjusted by the user 110. In the visual object 530, texts indicating the objects of interest may be aligned, according to the priority adjusted by the user 110. Referring to FIG. 5, in the visual object 530, in a state that a ball is set to have a higher priority than a player, the wearable device 101 may determine the external object 120 classified as the ball among a plurality of external objects as an external object focused by the user 110.

As described above, the wearable device 101 identifying the external object 120 focused by the user 110 may form a cluster for transmitting and/or receiving the information with respect to the external object 120. The cluster may be formed, based on establishing a communication link with one or more external electronic devices adjacent to the wearable device 101. The wearable device 101 may request and/or transmit the information with respect to the external object 120 through the communication link.

While forming the cluster with the one or more external electronic devices, information exchanged by the wearable device 101 through the cluster is not limited to the external object 120 focused by the user 110. For example, the wearable device 101 may provide information with respect to a specific external object capable of causing an accident and/or a dangerous situation among a plurality of external objects identified by the wearable device 101 to the one or more external electronic devices. For example, the wearable device 101 identifying an external object (e.g., a vehicle) that is moved from a blind spot (e.g., a blind spot occurring at an intersection) of a specific external electronic device toward the specific external electronic device (or a user wearing the specific external electronic device) may provide information with respect to an external object to the specific external electronic device. Based on the provision of the information, the wearable device 101 may warn access of the external object to the specific external electronic device. For example, the wearable device 101 may transmit a traffic situation (e.g., traffic congestion) identified by the wearable device 101 to the one or more external electronic devices through the cluster.

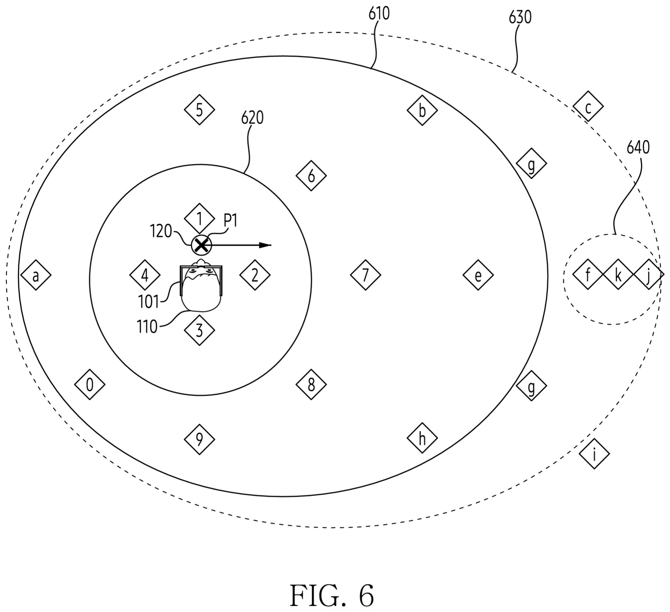

Hereinafter, an exemplary operation of the wearable device 101 forming the cluster to share the information with respect to the external object 120 will be described with reference to FIG. 6.

FIG. 6 illustrates an exemplary operation of a wearable device 101 for forming a cluster including one or more external electronic devices. The wearable device 101 of FIGS. 1 and/or 2 may perform an operation of the wearable device 101 described with reference to FIG. 6. For example, the wearable device 101 and/or the processor 210 of FIG. 2 may perform the operation of the wearable device 101 described with reference to FIG. 6.

Referring to FIG. 6, exemplary distribution of external electronic devices adjacent to the wearable device 101 is illustrated. A quadrangle in which an alphabet and/or a number are written may correspond to an external electronic device. Hereinafter, the external electronic device of FIG. 6 may be referred, based on the alphabet and/or the number described in the quadrangle. For example, an external electronic device a may correspond to an external electronic device illustrated in a quadrangle in which "a" is written.

Referring to FIG. 6, while displaying a visual object corresponding to an external object 120, the wearable device 101 may identify, based on a direction of a gaze directed to the visual object, a focus of a user 110 with respect to the external object 120. The wearable device 101 identifying the focus may identify a motion of the external object 120 using a camera. In an exemplary state of FIG. 6, the wearable device 101 may identify the motion of the external object 120 that is moved along a direction from a point p1. The wearable device 101 may establish a communication link with external electronic devices adjacent to the point p1, based on the motion. For example, wearable device 101 may form a cluster including external electronic devices (e.g., external electronic devices 0, 1, 2, 3, 4, 5, 6, 7, 8, 9, a, b, e, and h) included in an external space 610.

In an embodiment, the wearable device 101 may form the cluster in response to at least one of different conditions. For example, in a case that a preset period passes after being worn by the user 110, the wearable device 101 may form the cluster. The wearable device 101 may form the cluster based on the external object, in a case of identifying an external object that moves relatively quickly (e.g., having a speed greater than a speed of the user 110) among external objects recognized by the wearable device 101 before identifying the focus of the user 110. The wearable device 101 may form the cluster, based on a beacon indicating a specific place adjacent to the wearable device 101. The wearable device 101 may form the cluster, based on a request of a software application executed by the wearable device 101. Meanwhile, the wearable device 101 may not form the cluster, based on a specific condition. For example, in a case that an input for ceasing formation of the cluster is identified from the user 110, and/or that an external space including the wearable device 101 is a closed space, the wearable device 101 may not form the cluster.

A size and/or a shape of the external space 610 corresponding to the cluster may be associated with the motion of the external object 120 identified by the wearable device 101. For example, the external space 610 may have a shape of an ellipse, based on a speed of the external object 120 that is moved in a direction. A direction of a major axis of the ellipse may correspond to a movement direction of the external object 120. A length of the major axis of the ellipse may be proportional to the speed of the external object 120. For example, as the speed of the external object 120 increases, the wearable device 101 may increase a size of the external space that is a reference for forming a cluster, such as an external space 630 larger than the external space 610. For example, as the speed of the external object 120 decreases, the wearable device 101 may form the cluster, based on an external space having a size smaller than a size of the external space 610.

After forming the cluster, the wearable device 101 may exclude a specific external electronic device from the cluster and/or add a specific external electronic device to the cluster, based on the size and/or the shape of the external space 610 adjusted based on the motion of the external object 120. For example, in a case that the external object 120 is moved along a direction, the wearable device 101 may change the cluster, based on a new position of the moved external object 120. For example, by establishing a communication link with another external electronic device adjacent to the new position of the external object 120 and different from an external electronic device connected based on the cluster, the wearable device 101 may add the other external electronic device to the cluster.

Referring to FIG. 6, in an exemplary state connected to external electronic devices included in the external space 610, the wearable device 101 may share information with respect to the external object 120 with external electronic devices (e.g., external electronic devices 1, 2, 3, and 4 in an external space 620) adjacent to the external object 120 among the external electronic devices. The wearable device 101 may display the shared information on the display.

In an exemplary state of FIG. 6, according to an embodiment, the wearable device 101 may select and/or identify an external electronic device to which a communication link will be established, based on a positional relationship between FoVs of cameras included in external electronic devices and the external object 120. For example, in a state of forming the cluster with external electronic devices included in the external space 630, the wearable device 101 may identify external electronic devices f, k, and j positioned adjacent to each other in an external space 640. The wearable device 101 identifying the external electronic devices f, k, and j positioned at similar points or having FoVs overlapping each other may selectively establish a communication link with any one external electronic device among the external electronic devices f, k, and j.

In an embodiment, the wearable device 101 may select and/or identify external electronic devices to which a communication link will be established, based on a maximum value of the number of external electronic devices that may be connected at the same time. The wearable device 101 may identify an external object tracked by the external electronic devices, based on capability information of each of the external electronic devices in the external space 610 corresponding to the cluster. Based on whether the external object tracked by each of the external electronic devices matches the external object 120 focused by the user 110 of the wearable device 101, the wearable device 101 may select an external electronic device to which the communication link will be established. Based on the capability information, the wearable device 101 may establish the communication link with an external electronic device having a high probability of tracking the external object 120. Among the external electronic devices in the external space 610 corresponding to the cluster, the wearable device 101 may not establish the communication link with at least one external electronic device. At least one external electronic device to which the communication link with the wearable device 101 will not be established may be determined by the maximum value and/or the capability information.

As described above, according to an embodiment, the wearable device 101 may form a cluster based on P2P, independently of a centralized device such as a server. Using the cluster, the wearable device 101 may form a local information sharing network for tracking the external object 120 associated with the user 110. Information with respect to the external object 120 shared in the cluster may be provided to users of electronic devices included in the cluster. For example, users (e.g., a spectator and/or a referee) who receive information with respect to the external object 120 corresponding to a ball may perform an action associated with the external object 120, using the information. The wearable device 101 may assist the action by providing the information with respect to the external object 120 to an external electronic device using the cluster.

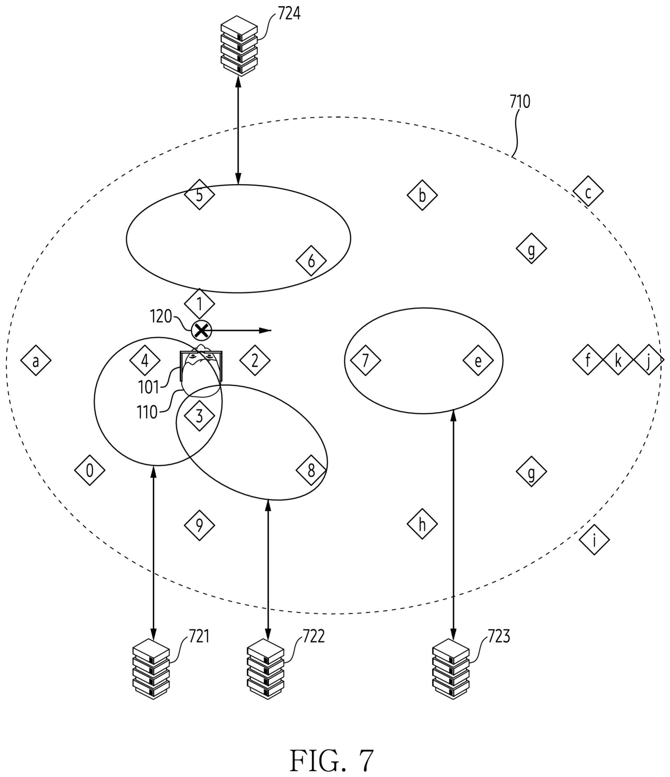

FIG. 7 illustrates an exemplary operation of the wearable device 101 for forming a cluster including one or more external electronic devices. The wearable device 101 of FIGS. 1 and/or 2 may perform an operation of the wearable device 101 described with reference to FIG. 7. For example, the wearable device 101 and/or the processor 210 of FIG. 2 may perform the operation of the wearable device 101 described with reference to FIG. 7.

Referring to FIG. 7, an exemplary distribution of external electronic devices adjacent to the wearable device 101 is illustrated. In a case of identifying a focus of a user 110 on an external object 120, the wearable device 101 may form a cluster, by establishing a communication link with at least one external electronic device included in an external space 710 formed based on a motion of the external object 120.

Referring to an exemplary case of FIG. 7, a plurality of electronic devices including the wearable device 101 may be connected to at least one of servers 721, 722, 723, and 724. For example, the wearable device 101, an external electronic device 3, and a external electronic device 4 may be connected to the first server 721. The first server 721 may obtain information with respect to one or more external objects tracked by each device from each of the wearable device 101, the external electronic device 3, and the external electronic device 4. For example, the external electronic device 3 and an external electronic device 8 may be connected to the second server 722. For example, an external electronic device 7 and an external electronic device e may be connected to the third server 723. For example, an external electronic device 5 and an external electronic device 6 may be connected to the fourth server 724. Each of the first server 721 to the fourth server 724 may manage information with respect to all external objects tracked by the connected electronic devices.

In an exemplary state of FIG. 7, the servers 721, 722, 723, and 724 may be configured to communicate with one or more electronic devices positioned in a specific place to provide a service associated with the specific place (e.g., a sports facility such as a baseball stadium). For example, the first server 721 may be configured to provide a service for a sport activity associated with the external object 120. Information with respect to the external object 120 obtained by the wearable device 101 may be used for video assistance reference (VAR) by being provided to the first server 721.

In an exemplary state of FIG. 7, in order to form the cluster with external electronic devices included in the external space 710, the wearable device 101 may communicate with a server connected to at least one of the external electronic devices. For example, instead of establishing a communication link with the external electronic device 7 and/or the external electronic device e, the wearable device 101 may communicate with the third server 723 connected to the external electronic device 7 and the external electronic device e. Since the third server 723 has information with respect to external objects tracked in the external electronic device 7 and the external electronic device e, the wearable device 101 may obtain all information with respect to the external objects tracked in the external electronic device 7 and the external electronic device e, by communicating with the third server 723. Similarly, the wearable device 101 may communicate with the fourth server 724 instead of the external electronic device 5 and the external electronic device 6. Similarly, the wearable device 101 may form the cluster by communicating with the second server 722 instead of the external electronic device 3 and the external electronic device 8.

In an exemplary state of FIG. 7, the information with respect to the external object 120 may be shared by the cluster formed based on the external space 710 and/or the servers 721, 722, 723, and 724 connected to the external electronic devices included in the cluster. For example, the wearable device 101 may (indirectly) transmit the information to the external electronic device 7 and/or the external electronic device e connected to the third server 723 by providing the information with respect to the external object 120 to the third server 723. Similarly, the wearable device 101 may (indirectly) obtain information with respect to an external object tracked by the external electronic device 5 through the fourth server 724.

After forming the cluster based on the operation described above with reference to FIGS. 6 and/or 7, the wearable device 101 may disconnect (and/or unlink) the communication link established with the external electronic devices included in the cluster based on moving of the external object 120. For example, in a case that a distance between any one external electronic device and the external object 120 included in the cluster is increased, and/or any one external electronic device included in the cluster is changed in a state in which the external object 120 is untraceable, the wearable device 101 may exclude the external electronic device from the cluster. Excluding the external electronic device from the cluster may include an operation in which the communication link between the external electronic device and the wearable device 101 is disconnected, and/or the external electronic device is disconnected (or unlink) from the communication link established for the cluster.

In an embodiment, the wearable device 101 may allocate a priority and/or a score indicating whether each of the external electronic devices may track the external object 120 to each of the external electronic devices included in the cluster. Based on the score allocated to each of the external electronic devices, the wearable device 101 may determine whether to exclude each of the external electronic devices from the cluster. The priority may be determined based on a probability that a user of an external electronic device focuses on the external object 120. The priority may be determined based on similarity of preference of the user of the external electronic device and preference of the user 110 of the wearable device 101. The priority may be associated with whether the external electronic device may track the external object 120 and/or whether more accurate information may be provided with respect to the external object 120. For example, in a case that an external electronic device is moved at a relatively high speed, the wearable device 101 may determine a priority with respect to the external electronic device (e.g., an external electronic device included in a vehicle and/or an airplane) capable of being moved at a relatively high speed as a higher priority than a priority with respect to another external electronic device.

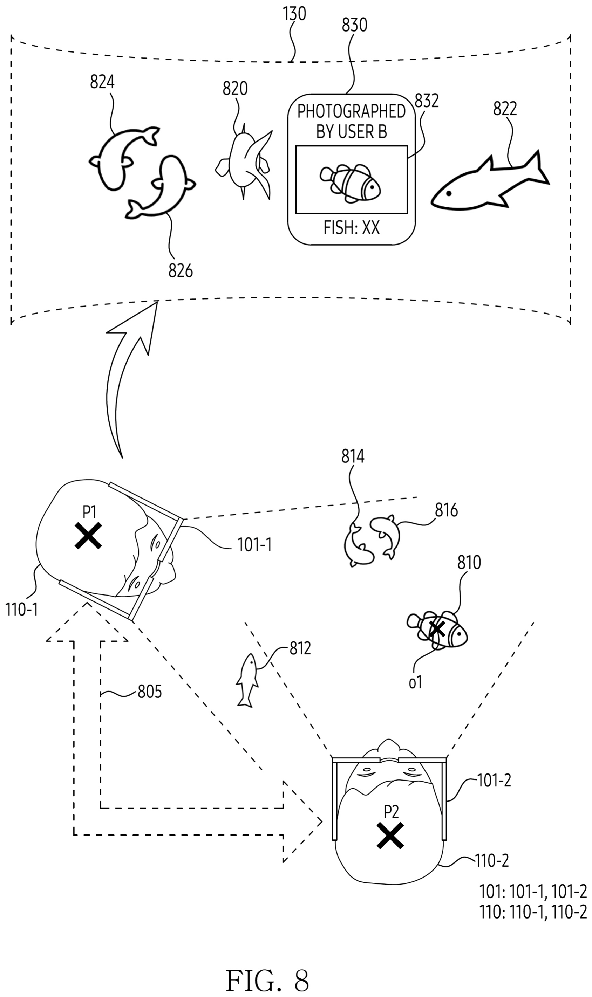

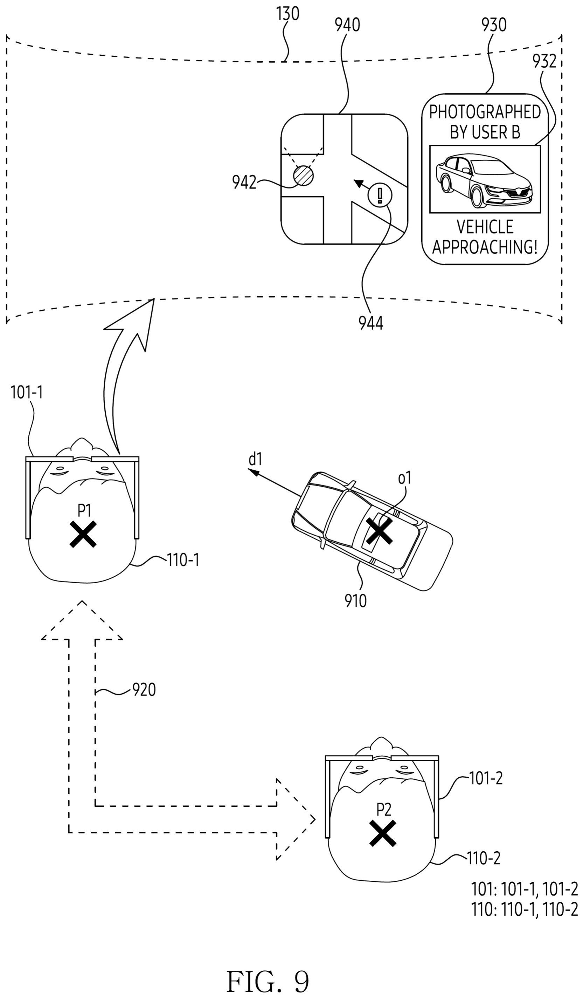

Hereinafter, a UI displayed by the electronic devices (e.g., the wearable device 101) included in the cluster will be exemplarily described with reference to FIGS. 8 and/or 9.

FIG. 8 illustrates an example of a screen 130 displayed by a wearable device 101 communicating with an external electronic device. The wearable device 101 of FIGS. 1 and/or 2 may perform an operation of the wearable device 101 described with reference to FIG. 8. For example, the wearable device 101 and/or the processor 210 of FIG. 2 may perform the operation of the wearable device 101 described with reference to FIG. 8.

Referring to FIG. 8, a first wearable device 101-1 and a second wearable device 101-2 included in an exemplary place such as an aquarium are illustrated. The first wearable device 101-1 positioned at a point p1 may display the screen 130 based on a VST. Through the screen 130, a first user 110-1 wearing the first wearable device 101-1 may view a video, in which fishes 810, 812, 814, and 816 are captured, in real time. The first wearable device 101-1 may display visual objects 820, 822, 824, and 826 corresponding to each of the fishes 810, 812, 814, and 816 in the screen 130.

In an exemplary case of FIG. 8, the first wearable device 101-1 may identify a gaze of the first user 110-1 wearing the first wearable device 101-1. For example, the first wearable device 101-1 may identify a focus of the first user 110-1 on the fish 810 corresponding to the visual object 820, based on identifying the gaze directed to the visual object 820 in the screen 130. The first wearable device 101-1 identifying the focus may form a cluster for tracking the fish 810. In order to form the cluster, the wearable device 101 may establish a communication link 805 with the second wearable device 101-2, based on a motion of the fish 810. For example, the wearable device 101 may establish the communication link 805 with the second wearable device 101-2 positioned at a point p2 adjacent to the fish 810 positioned at a point o1.

In a state that the communication link 805 is established, the first wearable device 101-1 may determine whether to obtain information with respect to the fish 810 through the communication link 805, based on a position and/or a size of the visual object 820 in the screen 130 corresponding to the fish 810 focused by the first user 110-1. For example, in a case that the visual object 820 is moved outside a boundary of the screen 130, based on moving of the fish 810, the wearable device 101 may request to transmit the information with respect to the fish 810 to the second wearable device 101-2 through the communication link 805. In the exemplary screen 130 of FIG. 8, in a case that the visual object 820 corresponding to the fish 810 is displayed in a size less than a preset size, the wearable device 101 may request to transmit the information with respect to the fish 810 to the second wearable device 101-2 through the communication link 805.

Referring to FIG. 8, in a state of receiving a signal requesting to transmit the information with respect to the fish 810 from the first wearable device 101-1, the second wearable device 101-2 may transmit the information associated with the fish 810 to the first wearable device 101-1. For example, the second wearable device 101-2 may transmit an image and/or a video associated with the fish 810 to the first wearable device 101-1. The video may include a video obtained in real time by the second wearable device 101-2. In response to obtaining the information associated with the fish 810 from the second wearable device 101-2, the first wearable device 101-1 may display a visual object 830 based on the information on the screen 130.

Referring to FIG. 8, in the visual object 830 based on the information obtained from the second wearable device 101-2, the first wearable device 101-1 may display text (e.g., "photographed by User B") indicating the second wearable device 101-2 providing the information. An embodiment is not limited thereto, and the first wearable device 101-1 may display the information (e.g., a name and/or a type of the fish) with respect to the fish 810 indicated by the information in the visual object 830. The first wearable device 101-1 may display a video 832 identified by the second wearable device 101-2 in the visual object 830. In response to a user input associated with the video 832, the first wearable device 101-1 may display the video provided from the second wearable device 101-2 on at least a portion of the screen 130.

In an exemplary case of FIG. 8, without a tag for the fish 810, 812, 814, and 816 and/or an external camera, the first wearable device 101-1 may obtain an image and/or the video 832 that may not be obtained by a camera of the first wearable device 101-1 from the second wearable device 101-2 adjacent to the fish 810. An exemplary operation of the first wearable device 101-1 for forming a cluster based on an external object (e.g., the fish 810) focused by the first user 110-1 wearing the first wearable device 101-1 and obtaining information from the cluster based on movement of the external object has been described, but an embodiment is not limited thereto. Hereinafter, an operation of the wearable device 101 receiving information from another external electronic device through the cluster will be described with reference to FIG. 9.

FIG. 9 illustrates an example of a screen 130 displayed by a wearable 101 device communicating with an external electronic device. The wearable device 101 of FIGS. 1 and/or 2 may perform an operation of the wearable device 101 described with reference to FIG. 9. For example, the wearable device 101 and/or the processor 210 of FIG. 2 may perform the operation of the wearable device 101 described with reference to FIG. 9.

Referring to FIG. 9, a first wearable device 101-1 and a second wearable device 101-2 positioned at a place such as an intersection and/or a road are illustrated. The second wearable device 101-2 may identify an external object 910, such as a vehicle, using a camera (e.g., the camera 225 and/or the outward camera 225-2 of FIG. 2). In an embodiment, the second wearable device 101-2 may determine whether to share information associated with the external object 910 with another external electronic device (e.g., the first wearable device 101-1), based on a priority of the external object 910 included in a result of recognizing the external object 910.

The priority of the external object 910 determined by the second wearable device 101-2 may be associated with one or more references. For example, the second wearable device 101-2 may determine the priority of the external object 910, based on time and/or a frequency at which a direction of a gaze of a second user 110-2 wearing the second wearable device 101-2 is directed to the external object 910. As the time and/or the frequency is increased, the priority corresponding to the external object 910 may be increased. For example, the second wearable device 101-2 may determine the priority of the external object 910, based on a category of the external object 910. In a case that the external object 910 is classified into a preset category (e.g., a vehicle) for classifying a dangerous object, the priority corresponding to the external object 910 may be increased.

For example, the second wearable device 101-2 may determine the priority of the external object 910, based on a speed and/or a distance of the external object 910. As the speed of the external object 910 is increased and/or a distance between the external object 910 and the second wearable device 101-2 is decreased, the priority corresponding to the external object 910 may be increased. For example, the second wearable device 101-2 may determine the priority of the external object 910, based on a movement direction of the external object 910. In a case that the movement direction of the external object 910 is opposite to a movement direction of the second user 110-2 wearing the second wearable device 101-2, the priority corresponding to the external object 910 may be increased.

For example, the second wearable device 101-2 may determine the priority of the external object 910, based on a temperature of the external object 910. In a case that the temperature of the external object 910 is included in a temperature range (e.g., a temperature range for identifying a fire) indicating an abnormal state, the priority corresponding to the external object 910 may be increased. For example, the second wearable device 101-2 may determine the priority of the external object 910, based on a sound generated from the external object 910. In a case that a loud sound greater than a threshold is generated from the external object 910, the priority corresponding to the external object 910 may be increased.

Although an operation in which the priority for the external object 910 is determined by a specific wearable device (in an exemplary case of FIG. 9, the second wearable device 101-2) is described, an embodiment is not limited thereto. For example, based on the number of electronic devices identifying a focus on the external object 910, the priority corresponding to the external object 910 may be increased proportionally. The number of the electronic devices identifying the focus on the external object 910 may be identified by a server (e.g., the first server 721 to the fourth server 724 of FIG. 7) connected to the electronic devices and/or electronic devices connected through a communication link 920.

Based on the priority (or a score) of the external object 910 determined based on the references described above, the second wearable device 101-2 may determine whether to share information corresponding to the external object 910 through the communication link 920. The second wearable device 101-2 identifying the external object 910, which is a vehicle directed in a direction d1, may share the information with respect to the external object 910 with the first wearable device 101-1 positioned in the direction d1.

In an embodiment, the first wearable device 101-1 may request to transmit information with respect to an external object included in a blind spot of the first wearable device 101-1 to a cluster formed through the communication link 920. The second wearable device 101-2 identifying the request may transmit the information with respect to the external object 910 to the first wearable device 101-1, based on identifying the external object 910 that is moved toward the first wearable device 101-1 along the direction d1. The request may be performed by the first user 110-1 wearing the first wearable device 101-1, and/or may be performed in response to a motion (e.g., a motion of the first user 110-1 repeatedly viewing the blind spot) of the first user 110-1 identified by the first wearable device 101-1.

Referring to FIG. 9, in a state that the information with respect to the external object 910 is shared by the second wearable device 101-2, the first wearable device 101-1 may display the screen 130 including a visual object (e.g., at least one of visual objects 930 and 940) associated with the external object 910, based on the information shared through the communication link 920. For example, the first wearable device 101-1 may display a video 932 captured by the second wearable device 101-2, such as the visual object 930. Together with the video 932, the first wearable device 101-1 may display text (e.g., "vehicle approaching!") for warning an approach of the external object 910. Together with the video 932, the first wearable device 101-1 may display text (e.g., "photographed by User B") indicating the external electronic device providing the video 932.

An embodiment is not limited thereto, and the first wearable device 101-1 may visualize a position of the external object 910 identified by the second wearable device 101-2, using the visual object 940 including a map. For example, in the visual object 940, the first wearable device 101-1 may display an indicator 944 for representing the position of the external object 910 shared by the second wearable device 101-2, together with an indicator 942 for representing a position of the first wearable device 101-1. Referring to FIG. 9, the indicator 944 may include a character (e.g., an exclamation mark) for indicating a dangerous object. Referring to FIG. 9, based on the information provided from the second wearable device 101-2 identifying the external object 910 that is moved along the direction d1, the first wearable device 101-1 may display an arrow corresponding to the direction d1 and extended from the indicator 944.

An exemplary operation of the first wearable device 101-1 displaying the information with respect to the external object 910 based on at least one of the visual objects 930 and 940 has been described, but an embodiment is not limited thereto. For example, the first wearable device 101-1 may notify the approach of the external object 910, based on a vibration notification. The vibration notification may be outputted based on control of a haptic actuator (e.g., a vibration motor) included in the first wearable device 101-1. For example, the first wearable device 101-1 may notify the first user 110-1 of the approach of the external object 910, by outputting an audio signal including a speech (e.g., a speech such as "vehicle is approaching"). In order to output the audio signal, the first wearable device 101-1 may execute a software application for text-to-speech (TTS). The first wearable device 101-1 may notify a direction in which the external object 910 approaches the first wearable device 101-1, using a visual object (e.g., an image and/or an icon in a shape of an arrow) displayed through the screen 130. Based on the direction, the first wearable device 101-1 may guide the first user 110-1 wearing the first wearable device 101-1 to see the direction with respect to the external object 910.

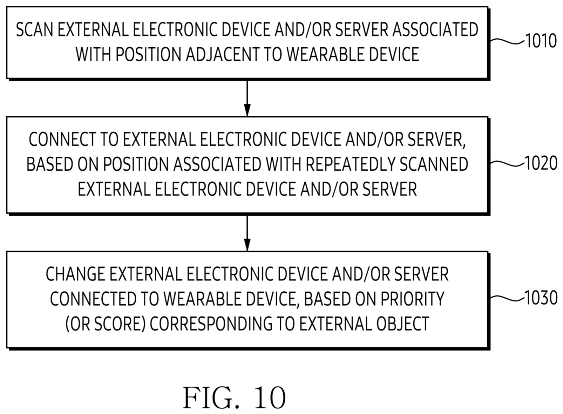

FIG. 10 illustrates an example of a flowchart of a wearable device, according to an embodiment. The wearable device 101 of FIGS. 1 and/or 2 may perform an operation of the wearable device described with reference to FIG. 10. For example, the wearable device 101 and/or the processor 210 of FIG. 2 may perform at least one of operations of FIG. 10. The operation of the wearable device described with reference to FIG. 10 may be associated with the operation 320 of FIG. 3 for forming a cluster.

Referring to FIG. 10, in operation 1010, a processor of the wearable device according to an embodiment may scan an external electronic device and/or a server associated with a position adjacent to the wearable device. For example, the processor may identify the external electronic device positioned at a point adjacent to the wearable device and/or the server connected to the external electronic device. The scan of operation 1010 may be performed before forming a cluster based on the wearable device, and/or to change the formed cluster.

Referring to FIG. 10, in operation 1020, according to an embodiment, the processor of the wearable device may connect to an external electronic device and/or a server, based on the position associated with the repeatedly scanned external electronic device and/or server. Repeated scanning of a specific external electronic device and/or a specific server may mean that the specific external electronic device and/or the specific server is disposed adjacent to the wearable device. Based on operation 1020, the wearable device may establish a communication link for the cluster with the external electronic device and/or the server.

Referring to FIG. 10, in operation 1030, according to an embodiment, the processor of the wearable device may change the external electronic device and/or the server connected to the wearable device, based on a priority (or a score) corresponding to an external object. The wearable device may change the priority (or the score) of the external object, based on a motion of the external object. For example, in a case that a focus of a user is identified on another external object different from the external object, the wearable device may decrease the priority for the external object. Based on the decreased priority, the wearable device may disconnect the external electronic device and/or server connected based on operation 1020, or perform the scan of operation 1010 again.

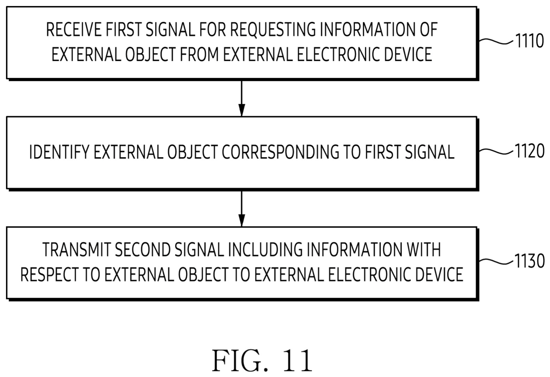

FIG. 11 illustrates an example of a flowchart of a wearable device, according to an embodiment. The wearable device 101 of FIGS. 1 and/or 2 may perform an operation of the wearable device described with reference to FIG. 10. For example, the wearable device 101 and/or the processor 210 of FIG. 2 may perform at least one of operations of FIG. 10.

Referring to FIG. 11, in operation 1110, device according to an embodiment, a processor of the wearable may receive a first signal for requesting information of an external object from an external electronic device. In a state that a cluster including the external electronic device is formed, the first signal may be received through a communication link for the cluster.

Referring to FIG. 11, in operation 1120, according to an embodiment, the processor of the wearable device may identify the external object corresponding to the first signal. Based on receiving the first signal of operation 1110, the processor may perform operation 1120. The processor may search for the external electronic device specified by the first signal, using a camera (e.g., the camera 225 and/or the outward camera 225-2 of FIG. 2). The processor may identify the external object of operation 1120 in a list of external objects tracked using a camera and/or a sensor of the wearable device including the processor.

Referring to FIG. 11, in operation 1130, the processor of the wearable device according to an embodiment may transmit a second signal including the information with respect to the external object to the external electronic device. The processor, which has not identified the external object of operation 1120, may not transmit a response to the first signal. In a case of identifying the external object, the processor may perform operation 1130. In operation 1130, the processor may transmit, as a response to the first signal, the second signal of operation 1130 to the external electronic device that transmitted the first signal of operation 1110 through the communication link for the cluster.

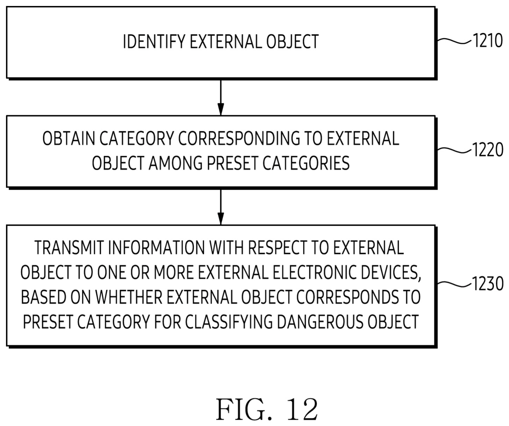

FIG. 12 illustrates an example of a flowchart of a wearable device, according to an embodiment. The wearable device 101 of FIGS. 1 and/or 2 may perform an operation of the wearable device described with reference to FIG. 10. For example, the wearable device 101 and/or the processor 210 of FIG. 2 may perform at least one of operations of FIG. 10.

Referring to FIG. 12, in operation 1210, according to an embodiment, a processor of the wearable device may identify an external object. The processor may identify the external object adjacent to the wearable device, using a camera (e.g., the camera 225 and/or the outward camera 225-2 of FIG. 2). The processor identifying the external object may perform operation 1220.

Referring to FIG. 12, in operation 1220, according to an embodiment, the processor of the wearable device may obtain a category corresponding to the external object among preset categories. The processor may classify the external object into any one of the preset categories by performing object recognition with respect to the external object. The preset categories may be distinguished according to whether to share the information with respect to the external object and/or whether to form a cluster associated with the external object. The preset categories may be distinguished according to a type of the external object.

Referring to FIG. 12, in operation 1230, according to an embodiment, the processor of the wearable device may transmit the information with respect to the external object to one or more external electronic devices, based on whether the external object corresponds to the preset category for classifying a dangerous object. The designated category may be set to classify a preset type of external object such as a vehicle. For example, the processor identifying the external object included in the preset category, such as the external object 910 of FIG. 9 may transmit the information with respect to the external object to an external electronic device, based on operation 1230. The one or more external electronic devices in operation 1230 may be connected to the wearable device to form the cluster. The processor may notify the one or more external electronic devices of the external object included in the preset category of operation 1230 being identified.

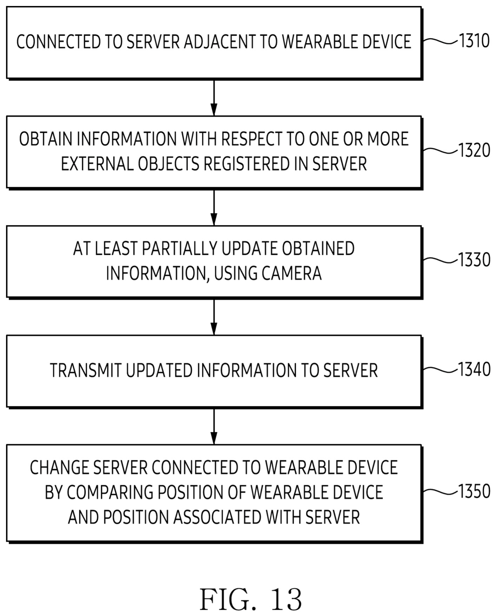

FIG. 13 illustrates an example of a flowchart of a wearable device, according to an embodiment. The wearable device 101 of FIGS. 1 and/or 2 may perform an operation of the wearable device described with reference to FIG. 10. For example, the wearable device 101 and/or the processor 210 of FIG. 2 may perform at least one of operations of FIG. 10.

Referring to FIG. 13, in operation 1310, according to an embodiment, the processor of the wearable device may be connected to a server adjacent to the wearable device. The server of operation 1310 may be provided to collect information with respect to an external object from one or more electronic devices, such as the first server 721 to the fourth server 724 of FIG. 7. Based on operation 1310, the processor may establish a communication link with a server including a point of the wearable device or corresponding to an external space adjacent to the point of the wearable device. Based on operation 1310, the processor may form a cluster including the server of operation 1310.

Referring to FIG. 13, in operation 1320, according to an embodiment, the processor of the wearable device may obtain information with respect to the one or more external objects registered in the server. The server may store the information with respect to the external objects received from external electronic devices connected to the server. The processor may obtain the information stored in the server based on operation 1320.

Referring to FIG. 13, in operation 1330, according to an embodiment, the processor of the wearable device may at least partially update information obtained using a camera. For example, the processor may update the information obtained based on operation 1320, by comparing the information obtained using the camera with the information obtained based on operation 1320.

Referring to FIG. 13, in operation 1340, according to an embodiment, the processor of the wearable device may transmit, to the server, the information updated based on operation 1330. Based on operation 1340, the information stored in the server may be updated by the processor of the wearable device. In a case that the information stored in the server is updated, the updated information may be shared with one or more external electronic devices connected to the server.

Referring to FIG. 13, in operation 1350, according to an embodiment, the processor of the wearable device may change the server connected to the wearable device by comparing a position of the wearable device and a position associated with the server. After being connected to the server based on operation 1310, the processor may reset the communication link between the wearable device and the server, based on moving of the wearable device including the processor and/or a change in the position associated with the server. For example, in a case that the wearable device is moved greater than a preset distance or is moved outside an external space associated with the server, the processor may disconnect the communication link between the wearable device and the server based on operation 1310 and identify a new server.

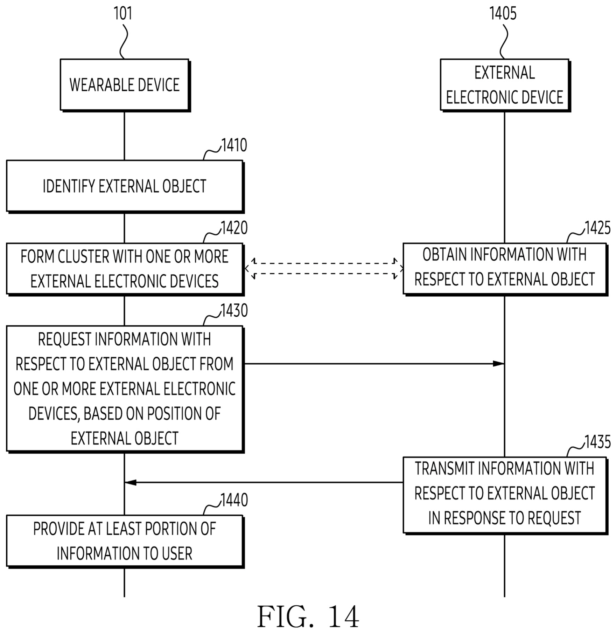

FIG. 14 illustrates an example of a signal flow diagram between a wearable device 101 and an external electronic device 1405, according to an embodiment. An operation of the wearable device 101 described with reference to FIG. 14 may be performed by the wearable device 101 and/or the processor 210 of FIG. 2. The external electronic device 1405 of FIG. 14 may include another wearable device and/or a server connected to the wearable device 101.

Referring to FIG. 14, in operation 1410, according to an embodiment, a processor of the wearable device 101 may identify an external object. The processor may obtain an image by controlling a camera of the wearable device. The image may be displayed on a display of the wearable device to provide a user experience based on a VST. The processor may perform the operation 1410 based on at least one of the operations of FIG. 12. Operation 1410 may be performed based on execution of the external object manager 291 of FIG. 2.

Referring to FIG. 14, in operation 1420, according to an embodiment, the processor of the wearable device 101 may form a cluster with one or more external electronic devices (e.g., the external electronic device 1405 of FIG. 14). An operation of the processor forming the cluster may be associated with at least one of the operations of FIG. 3. The cluster of operation 1420 may be associated with a position and/or a motion of the external object identified by a direction of a gaze of a user wearing the wearable device 101 in the image of operation 1410. The processor may identify the direction of the gaze using the camera (e.g., the eye tracking camera 225-1 of FIG. 2) of the wearable device.

Based on the cluster formed based on operation 1420, the external electronic device 1405 may identify an external object focused by the user of the wearable device 101. In operation 1425, the processor of the external electronic device 1405 may obtain information with respect to the external object. After forming the cluster, the processor of the external electronic device 1405 may monitor a position and/or a motion of the external object. The processor of the external electronic device 1405 may refrain from transmitting the position and/or the motion of the external object monitored by the external electronic device 1405 until receiving a signal for requesting the information with respect to the external object from the wearable device 101.

Referring to FIG. 14, in operation 1430, according to an embodiment, the processor of the wearable device 101 may request the information with respect to the external object from one or more external electronic devices, based on the position of the external object. For example, in a case that the external object is moved outside the image in the image obtained from the camera of the wearable device 101, the processor may perform operation 1430. Based on operation 1430, the wearable device 101 may transmit the signal for requesting the information with respect to the external object to the external electronic device 1405 included in the cluster of operation 1420.

Referring to FIG. 14, the processor of the external electronic device 1405 receiving the signal may transmit the information with respect to the external object in response to the request included in the signal, based on operation 1435. The information may include an image, a video and/or a sound of the external object identified by the processor of the external electronic device 1405.

Referring to FIG. 14, in operation 1440, according to an embodiment, the processor of the wearable device 101 may provide at least a portion of the information transmitted from the external electronic device 1405 to the user wearing the wearable device 101. For example, the wearable device 101 may display a visual object (e.g., the visual object 830 of FIG. 8) based on the information on the display. For example, the wearable device 101 may output an audio signal associated with the information to the user through a speaker. The audio signal may include a natural language sentence indicating the position and/or a direction of the external object identified from the external electronic device 1405. For example, the wearable device 101 may output a vibration notification based on the information to the user using a haptic actuator (or a vibration motor).

Hereinafter, an exemplary exterior of the wearable device described with reference to FIGS. 1 to 13 is illustrated with reference to FIGS. 15A, 15B, 16A and/or 16B. A wearable device 1500 of FIGS. 15A and/or 15B and/or a wearable device 1600 of FIG. 16A and/or 16B may be an example of the wearable device 101 of FIG. 1.

FIG. 15A illustrates an example of a perspective view of a wearable device according to an embodiment. A wearable device 1500 according to an embodiment may have a form of glasses wearable on a body part (e.g., a head) of a user. The wearable device 1500 may include a head-mounted display (HMD). For example, a housing of the wearable device 1500 may include a flexible material such as rubber and/or silicon having a form to be in close contact with a portion (e.g., a portion of a face surrounding two eyes) of the user's head. For example, the housing of the wearable device 1500 may include one or more straps able to be twined around the user's head and/or one or more temples attachable to ears of the head.

Referring to FIG. 15A, the wearable device 1500 according to an embodiment may include at least one display 1550 and a frame 1500 supporting the at least one display 1550.

According to an embodiment, the wearable device 1500 may be worn on a portion of the user's body. The wearable device 1500 may provide augmented reality (AR), virtual reality (VR), or a mixed reality (MR) in which the AR and the VR are mixed to a user wearing the wearable device 1500. For example, the wearable device 1500 may display, on the at least one display 1550, a virtual reality image provided by at least one optical device 1582 and 1584 of FIG. 15B, in response to a user's designated gesture obtained through motion recognition cameras 1560-2 and 1560-3 of FIG. 15B.

According to an embodiment, the at least one display 1550 may provide visual information to a user. For example, the at least one display 1550 may include a transparent or translucent lens. The at least one display 1550 may include a first display 1550-1 and/or a second display 1550-2 spaced apart from the first display 1550-1. For example, the first display 1550-1 and the second display 1550-2 may be disposed at positions corresponding to the user's left and right eyes, respectively.

Referring to FIG. 15B, the at least one display 1550 may provide visual information transmitted through a lens included in the at least one display 1550 from ambient light to a user and other visual information distinguished from the visual information15. The lens may be formed based on at least one of a fresnel lens, a pancake lens, or a multi-channel lens. For example, the at least one display 1550 may include a first surface 1531 and a second surface 1532 opposite to the first surface 1531. A display area may be formed on the second surface 1532 of at least one display 1550. When the user wears the wearable device 1500, ambient light may be transmitted to the user by being incident on the first surface 1531 and being penetrated through the second surface 1532. For another example, the at least one display 1550 may display an augmented reality image in which a virtual reality image provided by the at least one optical device 1582 and 1584 is combined with a reality screen transmitted through ambient light, on a display area formed on the second surface 1532.

According to an embodiment, the at least one display 1550 may include at least one waveguide 1533 and 1534 that transmits light transmitted from the at least one optical device 1582 and 1584 by diffracting to the user. The at least one waveguide 1533 and 1534 may be formed based on at least one of glass, plastic, or polymer. A nano pattern may be formed on at least a portion of the outside or inside of the at least one waveguide 1533 and 1534. The nano pattern may be formed based on a grating structure having a polygonal or curved shape. Light incident to an end of the at least one waveguide 1533 and 1534 may be propagated to another end of the at least one waveguide 1533 and 1534 by the nano pattern. The at least one waveguide 1533 and 1534 may include at least one of at least one diffraction element (e.g., a diffractive optical element (DOE), a holographic optical element (HOE)), and a reflection element (e.g., a reflection mirror). For example, the at least one waveguide 1533 and 1534 may be disposed in the wearable device 1500 to guide a screen displayed by the at least one display 1550 to the user's eyes. For example, the screen may be transmitted to the user's eyes based on total internal reflection (TIR) generated in the at least one waveguide 1533 and 1534.

The wearable device 1500 may analyze an object included in a real image collected through a photographing camera 1560-4, combine with a virtual object corresponding to an object that becomes a subject of augmented reality provision among the analyzed object, and display on the at least one display 1550. The virtual object may include at least one of text and images for various information associated with the object included in the real image. The wearable device 1500 may analyze the object based on a multi-camera such as a stereo camera. For the object analysis, the wearable device 1500 may execute space recognition (e.g., simultaneous localization and mapping (SLAM)) using the multi-camera and/or time-of-flight (ToF). The user wearing the wearable device 1500 may watch an image displayed on the at least one display 1550.

According to an embodiment, a frame 1500 may be configured with a physical structure in which the wearable device 1500 may be worn on the user's body. According to an embodiment, the frame 1500 may be configured so that when the user wears the wearable device 1500, the first display 1550-1 and the second display 1550-2 may be positioned corresponding to the user's left and right eyes. The frame 1500 may support the at least one display 1550. For example, the frame 1500 may support the first display 1550-1 and the second display 1550-2 to be positioned at positions corresponding to the user's left and right eyes.

Referring to FIG. 15A, according to an embodiment, the frame 1500 may include an area 1520 at least partially in contact with the portion of the user's body in case that the user wears the wearable device 1500. For example, the area 1520 of the frame 1500 in contact with the portion of the user's body may include an area in contact with a portion of the user's nose, a portion of the user's ear, and a portion of the side of the user's face that the wearable device 1500 contacts. According to an embodiment, the frame 1500 may include a nose pad 1510 that is contacted on the portion of the user's body. When the wearable device 1500 is worn by the user, the nose pad 1510 may be contacted on the portion of the user's nose. The frame 1500 may include a first temple 1504 and a second temple 1505, which are contacted on another portion of the user's body that is distinct from the portion of the user's body.

For example, the frame 1500 may include a first rim 1501 surrounding at least a portion of the first display 1550-1, a second rim 1502 surrounding at least a portion of the second display 1550-2, a bridge 1503 disposed between the first rim 1501 and the second rim 1502, a first pad 1511 disposed along a portion of the edge of the first rim 1501 from one end of the bridge 1503, a second pad 1512 disposed along a portion of the edge of the second rim 1502 from the other end of the bridge 1503, the first temple 1504 extending from the first rim 1501 and fixed to a portion of the wearer's ear, and the second temple 1505 extending from the second rim 1502 and fixed to a portion of the ear opposite to the ear. The first pad 1511 and the second pad 1512 may be in contact with the portion of the user's nose, and the first temple 1504 and the second temple 1505 may be in contact with a portion of the user's face and the portion of the user's ear. The temples 1504 and 1505 may be rotatably connected to the rim through hinge units 1506 and 1507 of FIG. 15B. The first temple 1504 may be rotatably connected with respect to the first rim 1501 through the first hinge unit 1506 disposed between the first rim 1501 and the first temple 1504. The second temple 1505 may be rotatably connected with respect to the second rim 1502 through the second hinge unit 1507 disposed between the second rim 1502 and the second temple 1505. According to an embodiment, the wearable device 1500 may identify an external object (e.g., a user's fingertip) touching the frame 1500 and/or a gesture performed by the external object by using a touch sensor, a grip sensor, and/or a proximity sensor formed on at least a portion of the surface of the frame 1500.

According to an embodiment, the wearable device 1500 may include hardware (e.g., hardware described above based on the block diagram of FIG. 2) that performs various functions. For example, the hardware may include a battery module 1570, an antenna module 1575, the at least one optical device 1582 and 1584, speakers (e.g., speakers 1555-1, 1555-2, and 1555-3), a microphone (e.g., microphones 1565-1, 1565-2, and 1565-3), a light emitting module, and/or a printed circuit board (PCB) 1590 (e.g., printed circuit board). Various hardware may be disposed in the frame.

According to an embodiment, the microphone (e.g., the microphones 1565-1, 1565-2, and 1565-3) of the wearable device 1500 may obtain a sound signal, by being disposed on at least a portion of the frame 1500. The first microphone 1565-1 disposed on the bridge 1503, the second microphone 1565-2 disposed on the second rim 1502, and the third microphone 1565-3 disposed on the first rim 1501 are illustrated in FIG. 15B, but the number and disposition of the microphone 1565 are not limited to an embodiment of FIG. 15B. In case that the number of the microphone 1565 included in the wearable device 1500 is two or more, the wearable device 1500 may identify a direction of the sound signal by using a plurality of microphones disposed on different portions of the frame 1500.

According to an embodiment, the at least one optical device 1582 and 1584 may project a virtual object on the at least one display 1550 in order to provide various image information to the user. For example, the at least one optical device 1582 and 1584 may be a projector. The at least one optical device 1582 and 1584 may be disposed adjacent to the at least one display 1550 or may be included in the at least one display 1550 as a portion of the at least one display 1550. According to an embodiment, the wearable device 1500 may include a first optical device 1582 corresponding to the first display 1550-1, and a second optical device 1584 corresponding to the second display 1550-2. For example, the at least one optical device 1582 and 1584 may include the first optical device 1582 disposed at a periphery of the first display 1550-1 and the second optical device 1584 disposed at a periphery of the second display 1550-2. The first optical device 1582 may transmit light to the first waveguide 1533 disposed on the first display 1550-1, and the second optical device 1584 may transmit light to the second waveguide 1534 disposed on the second display 1550-2.

In an embodiment, a camera 1560 may include the photographing camera 1560-4, an eye tracking camera (ET CAM) 1560-1, and/or the motion recognition camera 1560-2 and 1560-3. The photographing camera 1560-4, the eye tracking camera 1560-1, and the motion recognition camera 1560-2 and 1560-3 may be disposed at different positions on the frame 1500 and may perform different functions. The eye tracking camera 1560-1 may output data indicating a position of eye or a gaze of the user wearing the wearable device 1500. For example, the wearable device 1500 may detect the gaze from an image including the user's pupil obtained through the eye tracking camera 1560-1.

The wearable device 1500 may identify an object (e.g., a real object, and/or a virtual object) focused by the user, by using the user's gaze obtained through the eye tracking camera 1560-1. The wearable device 1500 identifying the focused object may execute a function (e.g., gaze interaction) for interaction between the user and the focused object. The wearable device 1500 may represent a portion corresponding to eye of an avatar indicating the user in the virtual space, by using the user's gaze obtained through the eye tracking camera 1560-1. The wearable device 1500 may render an image (or a screen) displayed on the at least one display 1550, based on the position of the user's eye.

For example, visual quality (e.g., resolution, brightness, saturation, grayscale, and PPI) of a first area related to the gaze within the image and visual quality of a second area distinguished from the first area may be different. The wearable device 1500 may obtain an image having the visual quality of the first area matching the user's gaze and the visual quality of the second area by using foveated rendering. For example, when the wearable device 1500 supports an iris recognition function, user authentication may be performed based on iris information obtained using the eye tracking camera 1560-1. An example in which the eye tracking camera 1560-1 is disposed toward the user's right eye is illustrated in FIG. 15B, but the embodiment is not limited thereto, and the eye tracking camera 1560-1 may be disposed alone toward the user's left eye or may be disposed toward two eyes.

In an embodiment, the photographing camera 1560-4 may photograph a real image or background to be matched with a virtual image in order to implement the augmented reality or mixed reality content. The photographing camera 1560-4 may be used to obtain an image having a high resolution based on a high resolution (HR) or a photo video (PV). The photographing camera 1560-4 may photograph an image of a specific object existing at a position viewed by the user and may provide the image to the at least one display 1550. The at least one display 1550 may display one image in which a virtual image provided through the at least one optical device 1582 and 1584 is overlapped with information on the real image or background including an image of the specific object obtained by using the photographing camera 1560-4. The wearable device 1500 may compensate for depth information (e.g., a distance between the wearable device 1500 and an external object obtained through a depth sensor), by using an image obtained through the photographing camera 1560-4. The wearable device 1500 may perform object recognition through an image obtained using the photographing camera 1560-4. The wearable device 1500 may perform a function (e.g., auto focus) of focusing an object (or subject) within an image and/or an optical image stabilization (OIS) function (e.g., an anti-shaking function) by using the photographing camera 1560-4. While displaying a screen representing a virtual space on the at least one display 1550, the wearable device 1500 may perform a pass through function for displaying an image obtained through the photographing camera 1560-4 overlapping at least a portion of the screen. In an embodiment, the photographing camera 1560-4 may be disposed on the bridge 1503 disposed between the first rim 1501 and the second rim 1502.

The eye tracking camera 1560-1 may implement a more realistic augmented reality by matching the user's gaze with the visual information provided on the at least one display 1550, by tracking the gaze of the user wearing the wearable device 1500. For example, when the user looks at the front, the wearable device 1500 may naturally display environment information associated with the user's front on the at least one display 1550 at a position where the user is positioned. The eye tracking camera 1560-1 may be configured to capture an image of the user's pupil in order to determine the user's gaze. For example, the eye tracking camera 1560-1 may receive gaze detection light reflected from the user's pupil and may track the user's gaze based on the position and movement of the received gaze detection light. In an embodiment, the eye tracking camera 1560-1 may be disposed at a position corresponding to the user's left and right eyes. For example, the eye tracking camera 1560-1 may be disposed in the first rim 1501 and/or the second rim 1502 to face the direction in which the user wearing the wearable device 1500 is positioned.

The motion recognition camera 1560-2 and 1560-3 may provide a specific event to the screen provided on the at least one display 1550 by recognizing the movement of the whole or portion of the user's body, such as the user's torso, hand, or face. The motion recognition camera 1560-2 and 1560-3 may obtain a signal corresponding to motion by recognizing the user's motion (e.g., gesture recognition), and may provide a display corresponding to the signal to the at least one display 1550. The processor may identify a signal corresponding to the operation and may perform a preset function based on the identification. The motion recognition camera 1560-2 and 1560-3 may be used to perform simultaneous localization and mapping (SLAM) for 6 degrees of freedom pose (6 dof pose) and/or a space recognition function using a depth map. The processor may perform a gesture recognition function and/or an object tracking function, by using the motion recognition camera 1560-2 and 1560-3. In an embodiment, the motion recognition camera 1560-2 and camera 1560-3 may be disposed on the first rim 1501 and/or the second rim 1502.

The camera 1560 included in the wearable device 1500 is not limited to the above-described eye tracking camera 1560-1 and the motion recognition camera 1560-2 and 1560-3. For example, the wearable device 1500 may identify an external object included in the FoV by using a camera disposed toward the user's FoV. The wearable device 1500 identifying the external object may be performed based on a sensor for identifying a distance between the wearable device 1500 and the external object, such as a depth sensor and/or a time of flight (ToF) sensor. The camera 1560 disposed toward the FoV may support an autofocus function and/or an optical image stabilization (OIS) function. For example, in order to obtain an image including a face of the user wearing the wearable device 1500, the wearable device 1500 may include the camera 1560 (e.g., a face tracking (FT) camera) disposed toward the face.

Although not illustrated, the wearable device 1500 according to an embodiment may further include a light source (e.g., LED) that emits light toward a subject (e.g., user's eyes, face, and/or an external object in the FoV) photographed by using the camera 1560. The light source may include an LED having an infrared wavelength. The light source may be disposed on at least one of the frame 1500, and the hinge units 1506 and 1507.

According to an embodiment, the battery module 1570 may supply power to electronic components of the wearable device 1500. In an embodiment, the battery module 1570 may be disposed in the first temple 1504 and/or the second temple 1505. For example, the battery module 1570 may be a plurality of battery modules 1570. The plurality of battery modules 1570, respectively, may be disposed on each of the first temple 1504 and the second temple 1505. In an embodiment, the battery module 1570 may be disposed at an end of the first temple 1504 and/or the second temple 1505.

The antenna module 1575 may transmit the signal or power to the outside of the wearable device 1500 or may receive the signal or power from the outside. In an embodiment, the antenna module 1575 may be disposed in the first temple 1504 and/or the second temple 1505. For example, the antenna module 1575 may be disposed close to one surface of the first temple 1504 and/or the second temple 1505.

The speaker 1555 may output a sound signal to the outside of the wearable device 1500. A sound output module may be referred to as a speaker. In an embodiment, the speaker 1555 may be disposed in the first temple 1504 and/or the second temple 1505 in order to be disposed adjacent to the ear of the user wearing the wearable device 1500. For example, the speaker 1555 may include a second speaker 1555-2 disposed adjacent to the user's left ear by being disposed in the first temple 1504, and a first speaker 1555-1 disposed adjacent to the user's right ear by being disposed in the second temple 1505.

The light emitting module (not illustrated) may include at least one light emitting element. The light emitting module may emit light of a color corresponding to a specific state or may emit light through an operation corresponding to the specific state in order to visually provide information on a specific state of the wearable device 1500 to the user. For example, when the wearable device 1500 requires charging, it may emit red light at a constant cycle. In an embodiment, the light emitting module may be disposed on the first rim 1501 and/or the second rim 1502.

Referring to FIG. 15B, according to an embodiment, the wearable device 1500 may include the printed circuit board (PCB) 1590. The PCB 1590 may be included in at least one of the first temple 1504 or the second temple 1505. The PCB 1590 may include an interposer disposed between at least two sub PCBs. On the PCB 1590, one or more hardware (e.g., hardware illustrated by the different blocks of FIG. 4) included in the wearable device 1500 may be disposed. The wearable device 1500 may include a flexible PCB (FPCB) for interconnecting the hardware.

According to an embodiment, the wearable device 1500 may include at least one of a gyro sensor, a gravity sensor, and/or an acceleration sensor for detecting the posture of the wearable device 1500 and/or the posture of a body part (e.g., a head) of the user wearing the wearable device 1500. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1500 may identify the user's motion and/or gesture performed to execute or stop a specific function of the wearable device 1500 based on the IMU.

FIGS. 16A to 16B illustrate an example of an exterior of a wearable device according to an embodiment. A wearable device 1600 of FIGS. 16A to 16B may include at least a portion of the hardware of the wearable device 1500 described with reference to FIGS. 15A and/or 15B. According to an embodiment, an example of an exterior of a first surface 1610 of a housing of the wearable device 1600 may be illustrated in FIG. 16A, and an example of an exterior of a second surface 1620 opposite to the first surface 1610 may be illustrated in FIG. 16B.

Referring to FIG. 16A, according to an embodiment, the first surface 1610 of the wearable device 1600 may have an attachable shape on the user's body part (e.g., the user's face). Although not illustrated, the wearable device 1600 may further include a strap for being fixed on the user's body part, and/or one or more temples (e.g., the first temple 1504 and/or the second temple 1505 of FIGS. 15A to 15B). A first display 1550-1 for outputting an image to the left eye among the user's two eyes and a second display 1550-2 for outputting an image to the right eye among the user's two eyes may be disposed on the first surface 1610. The wearable device 1600 may further include rubber or silicon packing, which are formed on the first surface 1610, for preventing interference by light (e.g., ambient light) different from the light emitted from the first display 1550-1 and the second display 1550-216.

According to an embodiment, the wearable device 1600 may include cameras 1560-1 for photographing and/or tracking two eyes of the user adjacent to each of the first display 1550-1 and the second display 1550-2. The cameras 1560-1 may be referred to as the gaze tracking camera 1560-1 of FIG. 15B. According to an embodiment, the wearable device 1600 may include cameras 1560-5 and 1560-6 for photographing and/or recognizing the user's face. The cameras 1560-5 and 1560-6 may be referred to as a FT camera. The wearable device 1600 may control an avatar representing a user in a virtual space, based on a motion of the user's face identified using the cameras 1560-5 and 1560-6. For example, the wearable device 1600 may change a texture and/or a shape of a portion (e.g., a portion of an avatar representing a human face) of the avatar, by using information obtained by the cameras 1560-5 and 1560-6 (e.g., the FT camera) and representing the facial expression of the user wearing the wearable device 1600.

Referring to FIG. 16B, a camera (e.g., cameras 1560-7, 1560-8, 1560-9, 1560-10, 1560-11, and 1560-12), and/or a sensor (e.g., the depth sensor 1630) for obtaining information associated with the external environment of the wearable device 1600 may be disposed on the second surface 1620 opposite to the first surface 1610 of FIG. 16A. For example, the cameras 1560-7, 1560-8, 1560-9, and 1560-10 may be disposed on the second surface 1620 in order to recognize an external object. The cameras 1560-7, 1560-8, 1560-9, and 1560-10 of the FIG. 16B may correspond to the motion recognition cameras 1560-2 and 1560-3 of FIG. 15B.

For example, by using cameras 1560-11 and 1560-12, the wearable device 1600 may obtain an image and/or video to be transmitted to each of the user's two eyes. The camera 1560-11 may be disposed on the second surface 1620 of the wearable device 1600 to obtain an image to be displayed through the second display 1550-2 corresponding to the right eye among the two eyes. The camera 1560-12 may be disposed on the second surface 1620 of the wearable device 1600 to obtain an image to be displayed through the first display 1550-1 corresponding to the left eye among the two eyes. The cameras 1560-11 and 1560-12 may correspond to the photographing camera 1560-4 of FIG. 15B.

According to an embodiment, the wearable device 1600 may include the depth sensor 1630 disposed on the second surface 1620 in order to identify a distance between the wearable device 1600 and the external object. By using the depth sensor 1630, the wearable device 1600 may obtain spatial information (e.g., a depth map) about at least a portion of the FoV of the user wearing the wearable device 1600. Although not illustrated, a microphone for obtaining sound outputted from the external object may be disposed on the second surface 1620 of the wearable device 1600. The number of microphones may be one or more according to embodiments.

Metaverse is a compound word of the English words "Meta" meaning "virtual" and "transcendence" and "Universe" meaning cosmos, and refers to a three-dimensional virtual world in which social, economic, and cultural activities take place like a real world. Metaverse is a concept that has evolved one step further than a virtual reality (VR, cutting-edge technology that enables people to experience real-life experiences in a virtual world created by a computer), and it is characterized by using avatars to not only enjoy games or virtual reality, but also social and cultural activities like a reality. A metaverse service may provide media content for enhancing immersion in the virtual world, based on an augmented reality (AR), a virtual reality environment (VR), a mixed environment (MR), and/or an extended reality (XR).

For example, media content provided by the metaverse service may include social interaction content including avatar-based game, concert, party, and/or meeting. For example, the media content may include information for economic activities such as advertising, user created content, and/or sales and/or shopping of productions. Ownership of the user created content may be proved by a blockchain-based non-fungible token (NFT). The metaverse service may support economic activities based on real money and/or cryptocurrency. By the metaverse service, virtual content associated with the real world, such as digital twin or life logging, may be provided.

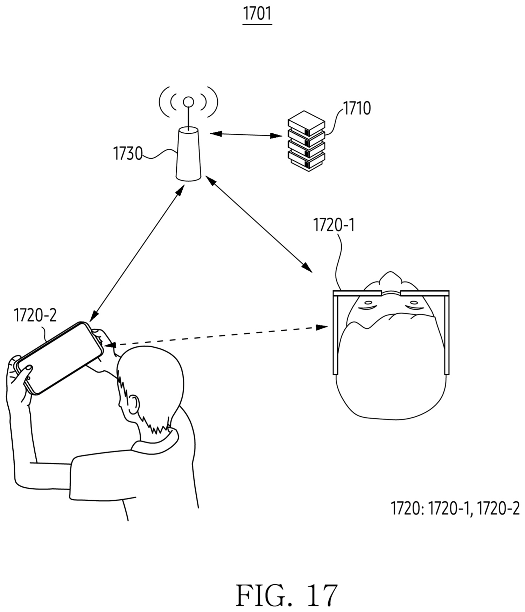

FIG. 17 is an exemplary diagram of a network environment 1701 in which a metaverse service is provided through a server 1710.

Referring to FIG. 17, a network environment 1701 may include a server 1710, a user terminal 1720 (e.g., a first terminal 1720-1 and a second terminal 1720-2), and a network connecting the server 1710 and the user terminal 1720. In the network environment 1701, the server 1710 may provide a metaverse service to the user terminal 1720. The network may be formed by at least one intermediate node 1730 including an access point (AP) and/or a base station. The user terminal 1720 may access the server 1720 through the network and output a user interface (UI) associated with a metaverse service to a user of the user terminal 1720. Based on the UI, the user terminal 1720 may obtain information to be inputted into the metaverse service from the user, or output information (e.g., multimedia content) associated with the metaverse service to the user.

In this case, the server 1710 provides a virtual space so that the user terminal 1720 may perform activities in the virtual space. In addition, the user terminal 1720 may represent information provided by the server 1710 to the user by installing an S/W agent to access the virtual space provided by the server 1710, or transmit information that the user wants to represent in the virtual space to the server. The S/W agent may be provided directly through the server 1710, downloaded from a public server, or embedded and provided when purchasing a terminal.

In an embodiment, the metaverse service may provide a service to the user terminal 1720 and/or a user by using the server 1710. The embodiment is not limited thereto, and the metaverse service may be provided through individual contacts between users. For example, in the network environment 1701, the metaverse service may be provided by a direct connection between the first terminal 1720-1 and the second terminal 1720-2, independently of the server 1710. Referring to FIG. 17, in the network environment 1701, the first terminal 1720-1 and the second terminal 1720-2 may be connected to each other through a network formed by at least one intermediate node 1730. In an embodiment in which the first terminal 1720-1 and the second terminal 1720-2 are directly connected, any one of the first terminal 1720-1 and the second terminal 1720-2 may perform a role of the server 1710. For example, a metaverse environment may be configured only with a device-to-device connection (e.g., a peer-to-peer (P2P) connection).

In an embodiment, the user terminal 1720 (or the user terminal 1720 including the first terminal 1720-1 and the second terminal 1720-2) may be made in various form factors, and it is characterized by including an output device for providing an image and/or sound to the user and an input device for inputting information into the metaverse service. An exemplary user terminal 1720 in various form factors may include a smartphone (e.g., the second terminal 1720-2), an AR device (e.g., the first terminal 1720-1), a VR device, an MR device, a Video See Through (VST) device, an Optical See Through (OST) device, a smart lens, a smart mirror, a TV capable of inputting and outputting, or a projector.

A network (e.g., a network formed by at least one intermediate node 1730) includes all of various broadband networks including 3G, 4G, and 5G and short-range networks (e.g., a wired network or a wireless network that directly connects the first terminal 1720-1 and the second terminal 1720-2) including Wi-Fi and BT.

The user terminal 1720 of FIG. 17 may include the wearable device described with reference to FIGS. 1 to 13.

In an embodiment, a method of tracking an external object using an external electronic device may be required in a state that the external object is moved out of a recognizable area by a wearable device. As described above, according to an embodiment, a wearable device (e.g., the wearable device 101 of FIG. 1) may comprise one or more sensors (e.g., the sensor 230 of FIG. 2), communication circuitry (e.g., the communication circuitry 235 of FIG. 2), a camera (e.g., the camera 225 of FIG. 2), a display (e.g., the display 220 of FIG. 2), and at least one processor (e.g., the processor 210 of FIG. 2). The at least one processor may be configured to obtain an image to be displayed on the display by controlling the camera. The at least one processor may be configured to identify a first visual object (e.g., the visual object 132 of FIG. 1) corresponding to an external object (e.g., the external object 120 of FIG. 1) in the obtained image. The at least one processor may be configured to display the image on the display. The at least one processor may be configured to identify a gaze of a user wearing the wearable device using the one or more sensors. The at least one processor may be configured to identify, based on a direction of the gaze directed to the first visual object, a motion of the external object using the camera. The at least one processor may be configured to establish, using the communication circuitry, a communication link (e.g., the communication link 150 of FIG. 1) with at least one external electronic device capable of tracking the external object that is identified based on the motion. The at least one processor may be configured to, based on identifying that a display of the first visual object is ceased after establishing the communication link, obtain information with respect to the external object from the at least one external electronic device through the communication link and display a second visual object (e.g., the visual object 150 of FIG. 1) associated with the external object on the display based on the obtained information.

For example, the at least one processor may be configured to identify the at least one external electronic device to be connected through the communication link based on a speed of the external object indicated by the motion.

For example, the at least one processor may be configured to establish the communication link by communicating with the at least one external electronic device included in an external space having a size associated with the speed.

For example, the at least one processor may be configured to display the second visual object including text indicating the at least one external electronic device providing the information, on the display.

For example, the at least one processor may be configured to display the second visual object including a video obtained by the at least one external electronic device, on the display.

For example, the at least one processor may be configured to identify the at least one external electronic device to which the communication link will be established based on a position relationship between the external object and field-of-views(FoVs) of cameras included in a plurality of external electronic devices adjacent to the wearable device.

For example, the at least one processor may be configured to obtain information indicating at least one external object tracked by each of the plurality of external electronic devices and the FoVs, from the plurality of external electronic devices. The at least one processor may be configured to identify the at least one external electronic device to which the communication link will be established, based on the information obtained from the plurality of external electronic devices.

For example, the at least one processor may be configured to, in a state that the wearable device is worn by the user, based on identifying that the first visual object is moved out of a periphery of the display by moving of the external object with respect to the wearable device in the display covering two eyes of the user, initiate obtaining the information from the at least one external electronic device.

As described above, according to an embodiment, a method of a wearable device may comprise obtaining an image to be displayed on a display of the wearable device by controlling a camera of the wearable device. The method may comprise identifying a first visual object corresponding to an external object in the obtained image. The method may comprise displaying the image on the display of the wearable device. The method may comprise identifying a gaze of a user wearing the wearable device using one or more sensors of the wearable device. The method may comprise identifying, based on a direction of the gaze directed to the first visual object, a motion of the external object using the camera. The method may comprise establishing, using communication circuitry of the wearable device, a communication link with at least one external electronic device capable of tracking the external object that is identified based on the motion. The method may comprise, based on identifying that a display of the first visual object is ceased after establishing the communication link, obtaining information with respect to the external object from the at least one external electronic device through the communication link and displaying a second visual object associated with the external object on the display based on the obtained information.

For example, the establishing may comprise identifying the at least one external electronic device to be connected through the communication link based on a speed of the external object indicated by the motion.

For example, the establishing may comprise establishing the communication link by communicating with the at least one external electronic device included in an external space having a size associated with the speed.

For example, the displaying the second visual object may comprise displaying the second visual object including text indicating the at least one external electronic device providing the information, on the display.

For example, the displaying the second visual object may comprise displaying the second visual object including a video obtained by the at least one external electronic device, on the display.

For example, the establishing may comprise identifying the at least one external electronic device to which the communication link will be established based on a position relationship between the external object and field-of-views(FoVs) of a camera included in a plurality of external electronic devices adjacent to the wearable device.

For example, the identifying the at least one external electronic device may comprise obtaining information indicating at least one external object tracked by each of the plurality of external electronic devices and the FoVs, from the plurality of external electronic devices. The method may comprise identifying the at least one external electronic device to which the communication link will be established, based on the information obtained from the plurality of external electronic devices.

For example, the identifying the second visual object may comprise, in a state that the wearable device is worn by the user, based on identifying that the first visual object is moved out of a periphery of the display by moving of the external object with respect to the wearable device in the display covering two eyes of the user, initiating obtaining the information from the at least one external electronic device.

As described above, according to an embodiment, a wearable device may comprise one or more sensors, communication circuitry, a camera, a display, and at least one processor. The at least one processor may be configured to obtain an image to be displayed on the display by controlling the camera. The at least one processor may be configured to display the image including a visual object corresponding to an external object on the display. The at least one processor may be configured to identify a direction of a gaze of a user wearing the wearable device, using sensor data of the one or more sensors. The at least one processor may be configured to, based on the direction of the gaze directed to the visual object, identify a motion of the external object that is moved along a direction from a first position using the camera. The at least one processor may be configured to establish, using the communication circuitry, a communication link with a first external electronic device adjacent to the first position, based on the motion. The at least one processor may be configured to, based on identifying that the external object is moved from the first position to a second position along the direction after establishing the communication link, change the communication link to share information with respect to the external object with the first external electronic device and a second external electronic device adjacent to the second position.

For example, the at least one processor may be configured to request the information with respect to the external object to be transmitted to the first external electronic device and the second external electronic device through the communication link, based on identifying that the external object is moved outside a field-of-view (FoV) of the camera, while displaying a video obtained from the camera on the display.

For example, the at least one processor may be configured to display another visual object based on the information on the display, in response to obtaining the information with respect to the external object from the first external electronic device or the second external electronic device through the communication link.

For example, the at least one processor may be configured to display the other visual object including text indicating an external electronic device corresponding to the obtained information among the first external electronic device or the second external electronic device.

As described above, according to an embodiment, a method of a wearable device may comprise obtaining an image to be displayed on the display, by controlling a camera of the wearable device. The method may comprise displaying the image including a visual object corresponding to an external object on the display of the wearable device. The method may comprise identifying a direction of a gaze of a user wearing the wearable device, using sensor data of one or more sensors of the wearable device. The method may comprise, based on the direction of the gaze directed to the visual object, identifying a motion of the external object that is moved along a direction from a first position, using the camera. The method may comprise establishing, using communication circuitry of the wearable device, a communication link with a first external electronic device adjacent to the first position, based on the motion. The method may comprise, based on identifying that the external object is moved from the first position to a second position along the direction after establishing the communication link, changing the communication link to share information with respect to the external object with the first external electronic device and a second external electronic device adjacent to the second position.

For example, the method may comprise requesting the information with respect to the external object to be transmitted to the first external electronic device and the second external electronic device through the communication link, based on identifying that the external object is moved outside a FoV of the camera, while displaying a video obtained from the camera on the display.

For example, the method may comprise displaying another visual object based on the information on the display, in response to obtaining the information with respect to the external object from the first external electronic device or the second external electronic device through the communication link.

For example, the at least one processor may be configured to display the other visual object including texts indicating an external electronic device corresponding to the obtained information among the first external electronic device or the second external electronic device.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computerreadable recording medium.

The method according to the embodiment may be implemented in the form of a program command that may be performed through various computer means and recorded on a computerreadable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device comprising:
one or more sensors;
communication circuitry;
a camera;
a display;
memory including one or more storage media storing instructions; and
at least one processor including processing circuitry,
wherein the instructions, when executed by the at least one processor individually or collectively, cause the wearable device to:
obtain an image to be displayed on the display by controlling the camera;
identify a first visual object corresponding to an external object in the obtained image;
display the image on the display;
identify a gaze of a user wearing the wearable device using the one or more sensors;
identify, based on a direction of the gaze directed to the first visual object, a motion of the external object using the camera;
establish, using the communication circuitry, a communication link with at least one external electronic device capable of tracking the external object that is identified based on the motion; and
based on identifying that a display of the first visual object is ceased after establishing the communication link, obtain information with respect to the external object from the at least one external electronic device through the communication link and display a second visual object associated with the external object on the display based on the obtained information.

2. The wearable device of claim 1, wherein the instructions, when executed by the at least one processor individually or collectively, cause the wearable device to:
identify the at least one external electronic device to be connected through the communication link based on a speed of the external object indicated by the motion.

3. The wearable device of claim 1 to claim 2, wherein the instructions, when executed by the at least one processor individually or collectively, cause the wearable device to:
establish the communication link by communicating with the at least one external electronic device included in an external space having a size associated with the speed.

4. The wearable device of claim 1 to claim 3, wherein the instructions, when executed by the at least one processor individually or collectively, cause the wearable device to:
display the second visual object including text indicating the at least one external electronic device providing the information, on the display.

5. The wearable device of claim 1 to claim 4, wherein the instructions, when executed by the at least one processor individually or collectively, cause the wearable device to:
display the second visual object including a video obtained by the at least one external electronic device, on the display.

6. The wearable device of claim 1 to claim 5, wherein the instructions, when executed by the at least one processor individually or collectively, cause the wearable device to:
identify the at least one external electronic device to which the communication link will be established based on a position relationship between the external object and field-ofviews(FoVs) of cameras included in a plurality of external electronic devices adjacent to the wearable device.

7. The wearable device of claim 1 to claim 6, wherein the instructions, when executed by the at least one processor individually or collectively, cause the wearable device to:
obtain information indicating at least one external object tracked by each of the plurality of external electronic devices and the FoVs, from the plurality of external electronic devices;
identify the at least one external electronic device to which the communication link will be established, based on the information obtained from the plurality of external electronic devices.

8. The wearable device of claim 1 to claim 7, wherein the instructions, when executed by the at least one processor individually or collectively, cause the wearable device to:
in a state that the wearable device is worn by the user, based on identifying that the first visual object is moved out of a periphery of the display by moving of the external object with respect to the wearable device in the display covering two eyes of the user, initiate obtaining the information from the at least one external electronic device

9. A method of a wearable device, comprising:
obtaining an image to be displayed on a display of the wearable device by controlling a camera of the wearable device;
identifying a first visual object corresponding to an external object in the obtained image;
displaying the image on the display of the wearable device;
identifying a gaze of a user wearing the wearable device using one or more sensors of the wearable device;
identifying, based on a direction of the gaze directed to the first visual object, a motion of the external object using the camera;
establishing, using communication circuitry of the wearable device, a communication link with at least one external electronic device capable of tracking the external object that is identified based on the motion; and
based on identifying that a display of the first visual object is ceased after establishing the communication link, obtaining information with respect to the external object from the at least one external electronic device through the communication link and displaying a second visual object associated with the external object on the display based on the obtained information.

10. The wearable device of claim 9, wherein the establishing comprising:
identifying the at least one external electronic device to be connected through the communication link based on a speed of the external object indicated by the motion.

11. The wearable device of claim 9 to claim 10, wherein the establishing comprising:
establishing the communication link by communicating with the at least one external electronic device included in an external space having a size associated with the speed.

12. The wearable device of claim 9 to claim 11, wherein the displaying the second visual object comprising:
displaying the second visual object including text indicating the at least one external electronic device providing the information, on the display.

13. The wearable device of claim 9 to claim 12, wherein the displaying the second visual object comprising:
displaying the second visual object including a video obtained by the at least one external electronic device, on the display.

14. The wearable device of claim 9 to claim 13, wherein the establishing comprising:
identifying the at least one external electronic device to which the communication link will be established based on a position relationship between the external object and field-ofviews(FoVs) of a camera included in a plurality of external electronic devices adjacent to the wearable device.

15. The wearable device of claim 9 to claim 14, wherein the identifying the at least one external electronic device comprising:
obtaining information indicating at least one external object tracked by each of the plurality of external electronic devices and the FoVs, from the plurality of external electronic devices;
identifying the at least one external electronic device to which the communication link will be established, based on the information obtained from the plurality of external electronic devices.
